# EUROPÄISCHE PATENTANMELDUNG

(11) **EP 4 675 530 A1**
(43) Veröffentlichungstag der Anmeldung: **07.01.2026**
(21) Anmeldenummer: 25186702.4
(22) Anmeldetag: 01.07.2025
(51) Int. Cl.: G06Q 10/087

(54) **VERFAHREN UND VORRICHTUNG ZUM VERTRIEB VON WAREN SOWIE INFORMATIONSTECHNISCHE SCHNITTSTELLE**

(30) Priorität: 01.07.2024 DE 102024118615; 07.11.2024 DE 102024132553
(71) Anmelder: Norddeutsch Gesund UG (haftungsbeschränkt), 20249 Hamburg (DE)
(72) Erfinder: Kirchbichler, Paul, 52064 Aachen (DE)
(74) Vertreter: Reuther, Martin

(57) **Zusammenfassung**

Eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren kann ermöglicht werden, wenn über eine Zentralverwaltung eine informationstechnische Kommunikation bereit gestellt wird, die für einzelne Produkte jeweils zwischen einer Verkaufsräumlichkeit und einem Lieferanten die für eine Lieferung und Veräußerung vereinbarten Bedingungen festhält und jeden einzelnen Verkauf dem Lieferanten transparent zur Verfügung stellt.

## Beschreibung

Die Erfindung betrifft ein Verfahren zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, das mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind. Ebenso betrifft die Erfindung eine Vorrichtung zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, das mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind. Auch betrifft die Erfindung informationstechnische Schnittstellen zur informationstechnischen Kommunikation eines Lieferanten mit einer Zentralverwaltung oder einer Verkaufsräumlichkeit bzw. zur informationstechnischen Kommunikation einer Verkaufsräumlichkeit mit einer Zentralverwaltung oder einem Lieferanten.

Verfahren und Vorrichtung zum Vertrieb von Waren auch unter Zuhilfenahme informationstechnischer Systeme sind hinlänglich am Markt bekannt. Aus der US 7,542,919 B1 ist hierbei bekannt, automatisch bestimmte Angebote zusammenzustellen, zu offerieren und zu verkaufen. Die US 2023/0267412 A1 offenbart hingegen eine von einem Lager ausgehende hierarchische Verteilung der Waren auf einzelne Verkaufsräumlichkeiten, während die CN 112381624 A eine unmittelbare Kommunikation zwischen diversen Verkaufsräumlichkeiten und Lieferanten offenbart. Auch offenbart insbesondere die US 2003/0069774 ein System, ein Verfahren und ein Computerprogramm, welches ein Netzwerk zwischen einem Lieferanten bzw. Produzenten und Verkaufsräumlichkeiten mit einer Zentralverwaltung schafft. Ähnliches offenbart auch die WO 2006/079663 A1, wobei hierbei der Schwerpunkt auf einem erfassbaren Identifikator, der mit Daten belegt werden kann, liegt und im Übrigen lediglich ein automatischer Abgleich des Warenbestands vorgesehen ist. Andererseits offenbaren die CH 714 906 A1 ein Auslieferungssystem von unterschiedlichen Händlern an unterschiedliche Kunden bzw. die DE 10 2012 016 426 A1 ein Zertifizierungssystem, um die Echtheit von Massengütern für den Endverbraucher zu zertifizieren.

Es ist Aufgabe vorliegender Erfindung, ein Verfahren und eine Vorrichtung zum Vertrieb von Waren sowie eine informationstechnische Schnittstelle bereitzustellen, welche eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren ermöglicht.

Die Aufgabe der Erfindung wird durch Verfahren und Vorrichtungen zum Vertrieb von Waren sowie durch informationstechnische Schnittstellen mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

Hierbei geht die Erfindung von der Grunderkenntnis aus, dass eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren ermöglicht werden kann, wenn über die Zentralverwaltung eine informationstechnische Kommunikation bereitgestellt wird, die für einzelne Produkte jeweils zwischen einer Verkaufsräumlichkeit und einem Lieferanten die für eine Lieferung und Veräußerung vereinbarten Bedingungen festhält und jeden einzelnen Verkauf dem Lieferanten transparent zur Verfügung stellt.

Bei geeigneter Ausgestaltung können hierdurch insbesondere gegenüber einem herkömmlichen Online-Handel Mehrsendungen dadurch vermieden werden, dass Kunden sich dezentral über bestimmte Artikel informieren und diese insbesondere haptisch überprüfen können, bevor eine Kaufentscheidung gefällt wird, indem der Kunde über für ihn lokal vorhandene und erreichbare Verkaufsräumlichkeiten entsprechend herkömmlicher Einzelhändler Produkte zur Verfügung gestellt bekommt, die jedoch, entsprechend bekanntem Online-Handel, über unterschiedlichste Lieferanten bereitgestellt werden.

In vorliegendem Zusammenhang bezeichnet der Begriff der Verkaufsräumlichkeiten örtlich eigenständige Entitäten, in denen Waren angeboten bzw. vorgehalten werden können und welche über wenigstens ein lokales Kassensystem verfügen. Hierbei wird in vorliegendem Zusammenhang insbesondere nicht zwischen der eigentlichen Lokalität einer Verkaufsräumlichkeit einerseits und einer im rechtlichen Sinne die Herrschaft über diese Verkaufsräumlichkeit ausübende Person, sei dieser eine natürliche Person, eine juristische Person oder ein sonstiger Rechtsträger, wie beispielsweise auch eine Gesellschaft, andererseits unterschieden. Insofern umfasst der Begriff der Verkaufsräumlichkeit in vorliegendem Zusammenhang insbesondere sowohl entsprechende Räumlichkeiten, wie beispielsweise Geschäftsräumlichkeiten, Hallen oder sonstige Räume, in denen Waren zu Verkaufszwecken präsentiert werden, als auch die zugehörigen Rechtsträger, welche die Herrschaft über diese Räumlichkeiten zumindest insoweit innehalten, dass sie den Zugang zu diesen Räumlichkeiten gewähren oder auch nicht gewähren können und auch im Übrigen in der Lage sind, Verträge, ggf. auch im Namen Dritter, abzuschließen.

Dementsprechend umfasst der Begriff der Lieferanten nicht nur eine Rechtspersönlichkeit, welche in der Lage ist, Waren bereitzustellen und diese ggf. auszuliefern sowie rechtsverbindliche Verträge einzugehen, sondern ggf. auch die zugehörigen Räumlichkeiten und übrige Einrichtungen, wie beispielsweise Lieferfahrzeuge und ähnliches. Insbesondere umfasst in vorliegendem Zusammenhang der Begriff der Lieferanten auch ggf. Produzenten, welche Ihre Waren nicht nur produzieren, sondern auch ausliefern und ggf. verkaufen möchten. Ebenso können Zwischenhändler oder Großhändler in vorliegendem Sinne als Lieferanten auftreten.

Insofern ist der Vertrieb von Waren an Kunden von einem Lieferanten aus auch zunächst in seiner allgemeinsten Form zu verstehen, wobei hierbei nicht nur ein Besitzwechsel zu dem Kunden, sondern auch Eigentumsübergang vorgesehen ist. Hierbei ist es in vorliegendem Zusammenhang zunächst einmal unabhängig davon, ob entsprechende Waren vor der zugehörigen Verkaufshandlung im Eigentum des Lieferanten verblieben sind und von der Verkaufsräumlichkeit lediglich für den Verkauf präsentiert werden oder ob die Waren zunächst von dem Lieferanten oder sogar einem dritten Eigentümer ausgehend an die Verkaufsräumlichkeit übereignet und dann von der Verkaufsräumlichkeit an den Kunden verkauft werden. Vorzugsweise bezieht der Vertrieb von Waren sämtliche mögliche Vertragskonstruktionen, mit denen letztlich ein Kunde Eigentümer der Waren werden kann, mit ein.

Auch die Zentralverwaltung wird in vorliegendem Zusammenhang nicht nur als organisatorische Entität, welche in vorliegendem Zusammenhang ggf. zwischen einem Lieferanten und einer Verkaufsräumlichkeit auftritt, verstanden, sondern kann insbesondere auch eine entsprechende rechtliche Entität sowie auch geeignete elektronische Einrichtungen bzw. informationstechnische Einrichtungen, Verwaltungsstrukturen und Räumlichkeiten umfassen. Wie vorliegend erläutert, braucht die Zentralverwaltung jedoch nicht zwingend körperlich in den Warenfluss einzugreifen, sondern kann, je nach konkreter Umsetzung, insbesondere lediglich in informationstechnischer Hinsicht sowie ggf. in organisatorischer Hinsicht in die Verfahrensabläufe eingreifen.

Um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen, kann sich ein Verfahren zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass eine Verkaufshandlung in einer Verkaufsräumlichkeit über die oder von der Verkaufsschnittstelle zu der Lieferantenschnittstelle unter Angabe des Verkaufspreises übermittelt wird.

Insbesondere kann die jeweilige Verkaufshandlung in der Zentralverwaltung abgespeichert werden, was den lokalen Aufwand bei einem Lieferanten senkt und an sich die Datensicherheit erhöht. Zwar scheint eine zentrale Speicherung von Daten zunächst hinsichtlich der Datensicherheit kritisch, da entsprechend ein zentraler Angriff genügt, um an alle Daten zu gelangen. Andererseits können die Sicherheitsmaßnahmen bei einer zentralen Speicherung bei gleichen bzw. vertretbaren Kosten auch entsprechend höher gewählt werden.

Auch richten sich die vorliegend dargestellten Lösungsansätze insbesondere an kleinere Lieferanten bzw. Verkaufsräumlichkeiten, bei denen - naturgemäß - die Datensicherheit oder auch der mit Daten zu betreibende Aufwand möglichst gering gehalten werden soll. Andererseits versteht es sich, dass - insbesondere wenn die vorliegend dargestellten Lösungsansätze einmal umgesetzt sind - auch Großunternehmen, große Lieferanten oder große Einzelhandelsketten die Vorteile entsprechend nutzen können. Dementsprechend kann durch eine zentrale Datenspeicherung in der Zentralverwaltung der diesbezügliche Aufwand bei den Lieferanten bzw. bei den Verkaufsräumlichkeiten minimiert werden.

Kumulativ bzw. alternativ zu den übrigen, in vorliegendem Zusammenhang als vorteilhaft dargestellten Merkmalskombinationen kann sich eine Vorrichtung zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass in der Zentralverwaltung sowohl ein vorgegebener Preis als auch ein tatsächlicher Verkaufspreis abspeicherbar und sowohl über die Lieferantenschnittstelle als auch über die Verkaufsschnittstelle zugänglich ist, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen.

Ebenso kann sich kumulativ bzw. alternativ zu den übrigen, in vorliegendem Zusammenhang als vorteilhaft erläuterten Merkmalskombinationen eine informationstechnische Schnittstelle zur informationstechnische Kommunikation eines Lieferanten mit einer Zentralverwaltung oder einer Verkaufsräumlichkeit dadurch auszeichnen, dass die Schnittstelle für eine Kommunikation von der Verkaufsräumlichkeit und/oder von der Zentralverwaltung zu dem Lieferanten zumindest Daten zu einer getätigten Verkaufshandlung, zu einem zugehörigen Verkaufspreis und zu einem Warenbestand in den Verkaufsräumlichkeiten bereitstellt, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Auch kann sich eine informationstechnische Schnittstelle zur informationstechnische Kommunikation einer Verkaufsräumlichkeit mit einer Zentralverwaltung oder einem Lieferanten dadurch auszeichnen, dass die Stelle für eine Kommunikation von der Verkaufsräumlichkeit zu der Zentralverwaltung und/oder zu dem Lieferanten zumindest Daten zu einer getätigten Verkaufshandlung, zu einem zugehörigen Verkaufspreis und zu einem Produktbestand in der Verkaufsräumlichkeit bereitstellt, um kumulativ bzw. alternativ zu den übrigen, in vorliegendem Zusammenhang als vorteilhaft beschriebenen Merkmalskombinationen eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen.

Als Waren kommen diesbezüglich insbesondere sämtliche Gegenstände infrage, welche von einem Lieferanten, sei dieses ein Produzent bzw. Hersteller oder auch ein Zwischenhändler oder Großhändler bzw. Einzelhändler, ausgehend an einen Kunden, der insbesondere ein Endkunde sein kann, veräußert werden können. Es ist andererseits auch denkbar, dass Ware an Verkaufsräumlichkeiten entgegengenommen und zu Wartungs- oder Reparaturzwecken an Lieferanten weitergeleitet wird, welche diese dann warten bzw. reparieren und über die vorliegend beschriebenen Wege wieder zu den Verkaufsräumlichkeiten senden können. **In** derartigen Fällen stünde ein Eigentumsübergang nicht im Vordergrund, sondern eigentlich sogar ein Dienstleistungsgedanke. Dementsprechend umfasst der Begriff der "Waren" in vorliegenden Zusammenhang vorzugsweise auch Dienstleistungen, welche über die Verkaufsräumlichkeiten vermittelt werden.

**In** vorliegendem Zusammenhang erscheinen insbesondere handwerklich hergestellte Waren bzw. lokal produzierte Waren oder lokal vermittelte Dienstleistungen besonders vorteilhaft, wobei eine diesbezügliche Beschränkung zunächst nicht vorgesehen ist. Insbesondere erscheinen Waren, welche für einen Kauf einer unmittelbaren Begutachtung durch den jeweiligen Kunden unterzogen werden sollten, besonders vorteilhaft.

Wie bereits vorstehend angeordnet deutet, richten sich die vertriebenen Waren insbesondere an Endverbraucher als Kunden. Es versteht sich, dass - je nach konkreter Umsetzung - auch andere Entitäten als Kunden infrage kommen.

Insbesondere unterschiedliche Entitäten kommen als örtlich getrennte Verkaufsräumlichkeiten infrage. Die vorliegende Systematik eignet sich insbesondere für örtlich getrennte Verkaufsstellen, in denen unterschiedliche Waren angeboten werden sollen. So ist es insbesondere denkbar, örtlich getrennte Verkaufsräumlichkeiten jeweils an die lokal vorhandenen Wünsche von Kunden oder auch an lokal vorhandene Lieferanten mit Waren zu bestücken. **In** diesem Zusammenhang ist es zunächst unerheblich, ob die örtlich getrennten Verkaufsräumlichkeiten zu identischen Inhabern gehören oder nicht. Insbesondere besteht die Möglichkeit, völlig unterschiedlich Inhaber in ein entsprechendes Vertriebssystem einzubilden binden, was insbesondere auch für völlig unterschiedliche Lieferanten gilt.

Auch erscheint es hinsichtlich der technischen Voraussetzungen zunächst irrelevant, inwieweit Eigentümerwechsel bei den jeweiligen Waren, welche von Kunden letztlich erworben werden sollen, stattfinden oder nicht. So ist es insbesondere auch denkbar, dass in einzelnen örtlich getrennten Verkaufsräumlichkeiten Waren bestimmter Lieferanten auf Kommission angeboten werden. Ebenso ist es denkbar, dass in anderen Verkaufsräumlichkeiten oder auch in denselben Verkaufsräumlichkeit Waren über entsprechende Besitzerwechsel zu dem jeweiligen Betreiber einer örtlichen Verkaufsräumlichkeit von diesem Betreiber an die jeweiligen Kunden verkauft werden. Auch Eigentumsübergänge unmittelbar zwischen einem Lieferanten und einem Kunden, bei denen die Verkaufsräumlichkeiten lediglich als Lager bzw. Ausstellungsraum dienen, können auf diese Weise ebenfalls umgesetzt werden. Insbesondere dadurch, dass eine Verkaufshandlung unter Angabe des Verkaufspreises übermittelt wird, erhält die Zentralverwaltung bzw. der Lieferant, je nach konkreter Umsetzung, in Abweichung zu anderen, vergleichbaren Verkaufssystemen, einen unmittelbaren Zugriff auf die jeweilige Verkaufshandlung, was insbesondere bei einem Verkauf hinsichtlich einer Provision von Bedeutung ist. Insbesondere behält der Lieferant auf diese Weise die Möglichkeit, einen endgültigen Verkaufspreis zu kennen und damit eine etwaige Vertragstreue oder auch für ihn unerwünschte Preisentwicklungen frühzeitig zu erkennen.

Eine örtliche Trennung der Verkaufsräumlichkeiten kann - und dieses liegt in der Natur der Sache - über erhebliche Entfernungen erfolgen. Andererseits ist es auch denkbar, dass sich Verkaufsräumlichkeiten in sehr großer Nähe zueinander zu finden sind, so solange diese unterschiedlichen Entitäten zugeordnet und über eigene lokale Kassensysteme verfügen. Insbesondere ist es auch denkbar, dass getrennte Verkaufsräumlichkeiten über ein gemeinsames lokales Kassensystem verfügen, was insbesondere dann vorteilhaft erscheint, wenn derartige örtlich getrennte Verkaufsräumlichkeiten, die zwar einer größeren räumlichen Trennung unterliegen, identischen Betreibern bzw. Inhabern zugeordnet werden können.

Insofern bezieht sich der Begriff einer örtlichen Trennung der Verkaufsräumlichkeiten einerseits insbesondere auf eine räumlichen Abstand zwischen wenigstens zwei derartiger Verkaufsräumlichkeiten, während dieser Begriff andererseits in Bezug auf lokale Kassensysteme darauf abstellt, dass gegebenenfalls örtlich getrennte Verkaufsräumlichkeiten, auch wenn diese in unmittelbarer Nähe zueinander befindlich sind, auf unterschiedliche Kassensysteme zugreifen. Ebenso ist in der Regel vorgesehen, dass lokale Kassensysteme in einem engen räumlichen Umfeld zu finden sind, beispielsweise in kleineren Verkaufsräumlichkeiten, wie Ladengeschäften oder Hallen. Andererseits ist es auch denkbar, dass lokale Kassensysteme überörtliche ausgestaltet sind und räumlich getrennte Verkaufsräumlichkeiten gemeinsam bedienen, was insbesondere dann von Vorteil erscheint, wenn - wie bereits vorstehend angedeutet - die entsprechenden örtlich getrennten bzw. räumlich getrennten Verkaufsräumlichkeiten identischen Inhabern zuzuordnen sind.

Das vorliegende Vertriebssystem ermöglicht es insbesondere auch völlig unterschiedliche Lieferanten jeweils einzelnen Verkaufsräumlichkeiten bzw. einer einzelnen Verkaufsräumlichkeit zuzuordnen, wobei sich versteht, dass sämtliche Möglichkeiten, in welchen sich Lieferanten unterscheiden können, unter dem Begriff "unterschiedliche Lieferanten" zusammenzufassen sind. Insbesondere ist es bei lokal tätigen Lieferanten möglich, dass in unterschiedlichen Verkaufsräumlichkeiten unterschiedliche Lieferanten auch dieselben Waren anbieten bzw. anliefern können, was insbesondere hinsichtlich möglichst kurzer Lieferwege, insbesondere bei lokalem Handwerk oder lokal bereitgestellten Nahrungsmitteln, von Vorteil erscheint. Auch kann sogar beispielsweise ein identischer oder sehr ähnlicher Warensatz von unterschiedlichen Lieferanten in derselben Verkaufsräumlichkeit angeboten werden, beispielsweise Äpfel verschiedener Bauern oder Handwerkerdienstleistungen unterschiedlicher Handwerker.

Wie bereits vorstehend dargelegt, kann in der Zentralverwaltung sowohl ein vorgegebener Preis als auch ein tatsächlicher Verkaufspreis abspeicherbar sein, wobei es letztlich beispielsweise bei einer Verkaufsräumlichkeit und einem Lieferanten möglich ist, einen entsprechenden vorgegebenen Preis zu vereinbaren. Hierbei ist der Weg, wie eine entsprechende Preisvereinbarung zustande kommt, letztlich unerheblich, solange der entsprechend vorgegebene Preis in der Zentralverwaltung abspeicherbar und entsprechend über die Lieferantenschnittstelle bzw. über die Verkaufsschnittstelle zugänglich ist. Auf diese Weise kann unter Ausnutzung der vorliegenden Vorrichtung bzw. der zugehörigen informationstechnischen Schnittstellen, je nach konkreter Umsetzung, ein vorgegebener Preis vereinbart werden, der gegebenenfalls auch sehr flexibel an gegebene Besonderheiten angepasst werden kann. Beispielsweise ist es möglich, dass saisonbedingt Preise für Nahrungsmittel variieren können, was gegebenenfalls ein entsprechender Lieferant auch sehr kurzfristig vorgeben kann.

Ebenso erweist es sich als vorteilhaft, wenn der tatsächliche Verkaufspreis in der Zentralverwaltung abspeicherbar und sowohl über die Lieferantenschnittstelle als auch über die Verkaufsschnittstelle zugänglich ist, sodass - je nach konkreter Umsetzung - es dem Betreiber einer Verkaufsräumlichkeit möglich ist, unter Umständen von einem vorgegebenen Preis abzuweichen, beispielsweise wenn ein Verfallsdatum sich nähert. Auch in diesem Zusammenhang ermöglichen die vorliegenden Vorrichtungen bzw. informationstechnischen Schnittstellen eine sehr hohe Transparenz zwischen einem Lieferanten und dem Betreiber einer Verkaufsräumlichkeit.

Hierbei stellt die Zentralverwaltung vorzugsweise die technischen Möglichkeiten sowohl für den Lieferanten als auch für den Betreiber einer Verkaufsräumlichkeit zur Verfügung und sorgt für eine neutrale Abspeicherung der entsprechenden Werte bzw. Daten.

Im vorliegenden Zusammenhang bezeichnet der Begriff der "informationstechnischen Schnittstelle" eine gerätebasierte und nach informationstechnischen Vorgaben normierte Datenverbindung zwischen wenigstens zwei Recheneinheiten, welche an sich zunächst austauschbar sind, solange sie über die technische Ausstattung verfügen, die informationstechnischen Schnittstelle entsprechend der informationstechnischen Vorgaben dieser Schnittstelle mit Daten zu versorgen bzw. von dieser Schnittstelle übermittelten Daten in Empfang zu nehmen. In technischer Hinsicht kann diese Schnittstelle elektronisch bzw. elektrotechnisch ausgebildet sein. Auch ist es denkbar, dass beispielsweise opto-elektrische Wandler oder elektromagnetische Sender bzw. Empfänger diesbezüglich zum Einsatz kommen. In informationstechnischer Hinsicht sorgt eine informationstechnischen Schnittstelle dafür, dass ein von einer Gerätschaft, sei diese beispielsweise bei einem Lieferanten oder in einer Verkaufsräumlichkeit bzw. in der Zentralverwaltung verortet, ankommende Signalströme konkreten Daten zugeordnet werden bzw. dass Daten, welche über eine derartige Schnittstelle ausgegeben werden sollen, in einen Signalstrom gewandelt werden, welcher von einem Schnittstellenpendant entsprechend in Daten aufgeschlüsselt werden kann.

In vorliegendem Zusammenhang ist mithin eine informationstechnische Verkaufsschnittstelle dafür ausgelegt, Gerätschaften, welche in Verkaufsräumlichkeiten verortet sind, mit entsprechend über einen Signalstrom ankommenden Daten zu versorgen oder von diesen Gerätschaften ausgehende Daten in einen entsprechenden Signalstrom zu wandeln, der dann von der Verkaufsräumlichkeit ausgehend abgesandt werden kann. Dementsprechend ist eine informationstechnische Lieferantenschnittstelle vorzugsweise mit Gerätschaften, welche bei einem Lieferanten verortet sind, dergestalt verbunden, dass ein bei einem Lieferanten eingehende Signalstrom entsprechend in Daten aufgeschlüsselt und von diesen Geräten verarbeitet werden kann und dass Daten, welche von diesen Geräten ausgesandt werden sollen, von der informationstechnischen Lieferantenschnittstelle in einen entsprechenden Signalstrom verwandelt werden können.

Die Verbindung zwischen den informationstechnischen Schnittstellen, insbesondere zwischen den informationstechnischen Verkaufsschnittstellen und den informationstechnischen Lieferantenschnittstelle bzw. von Schnittstellen bei der Zentralverwaltung, kann über sämtliche bekannten technischen Möglichkeiten erfolgen, wobei vorzugsweise das Internet zum Einsatz kommt. Andererseits können auch unmittelbare bidirektionale Verbindungen, beispielsweise über Datenleitungen o. ä., zum Einsatz kommen.

Insbesondere können die informationstechnischen Schnittstellen zur informationstechnischen Kommunikation zwischen Lieferanten, Verkaufsräumlichkeit bzw. Zentralverwaltung von der Verkaufsräumlichkeit bzw. von der Zentralverwaltung zu dem Lieferanten hin oder von der Verkaufsräumlichkeit zu der Zentralverwaltung bzw. zu dem Lieferanten hin zumindest Daten zu einer getätigten Verkaufshandlung, zu einem zugehörigen Verkaufspreis und zu einem Warenbestand in den Verkaufsräumlichkeiten bereitstellen.

Rein physisch können die Schnittstellen an sich an jeder Örtlichkeit, die geeignet erscheint, vorgesehen sein, solange dann eine entsprechende informationstechnische Verbindung von der entsprechenden Schnittstelle zu den Gerätschäften, an denen die zugehörige Information benötigt wird, besteht. Je nach konkreter Umsetzung ist auch denkbar, dass eine physische Schnittstelle, wie beispielsweise ein Eingabegerät für eine Verkaufsräumlichkeit, außerhalb der Verkaufsräumlichkeit, beispielsweise im Wohnzimmer eines Hofladenbetreibers, zu finden ist, solange dieses unter Berücksichtigung der lokalen Gegebenheiten für die betroffenen Beteiligten noch angemessen erscheint.

Die Daten einer getätigten Verkaufshandlung können insbesondere die jeweiligen Waren, welche gegebenenfalls nach Lieferanten aufgeschlüsselt bzw. lediglich für einen Lieferanten zusammengestellt sind, und das Datum der Verkaufshandlung umfassen. Im Zusammenspiel mit dem zugehörigen Verkaufspreis, der je nach Vorgaben als Netto- bzw. Bruttoverkaufspreis abgebildet sein bzw. beide Angaben umfassen kann, haben mithin die Zentralverwaltung bzw. der jeweilige Lieferant ein genaues Bild von der jeweiligen Verkaufshandlung. Insofern können die Daten zu einer getätigten Verkaufshandlung jede Art der Information umfassen, welche für eine eindeutige Charakterisierung der jeweiligen Verkaufshandlung notwendig erscheinen.

Dadurch, dass über die zugehörige Schnittstelle auch Daten zu einem Warenbestand in den Verkaufsräumlichkeiten bereitgestellt werden, besteht die Möglichkeit, dass der Warenbestand unmittelbar kontrolliert und gegebenenfalls eine Nachlieferung von Waren initialisiert wird. Je nach konkreten Vereinbarungen zwischen dem Lieferanten und der Verkaufsräumlichkeit kann auf diese Weise ein ausreichender bzw. gewünschter Warenbestand schnell und betriebssicher garantiert werden. Auch lassen sich durch die entsprechende Angabe der jeweiligen Liefermengen optimieren.

Kumulativ bzw. alternativ zu den übrigen, in vorliegenden Zusammenhalt vorteilhaft beschriebenen Merkmalskombinationen kann sich eine informationstechnische Schnittstelle zur informationstechnischen Kommunikation einer Verkaufsräumlichkeit mit einer Zentralverwaltung oder einem Lieferanten bzw. zur informationstechnischen Kommunikation eines Lieferanten mit einer Zentralverwaltung oder einer Verkaufsräumlichkeit dadurch auszeichnen, dass die Schnittstelle für eine Kommunikation von dem Lieferanten zu der Zentralverwaltung und/oder zu der Verkaufsräumlichkeit zumindest Daten über aktuelle Lieferungen des Lieferanten zu den Verkaufsräumlichkeiten bereitstellt, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Im konkreten kann auf diese Weise insbesondere den Verkaufsräumlichkeiten bzw. den dort ansässigen Betreiber unmittelbar mitgeteilt werden, welche Lieferungen unterwegs sind, sodass vor Ort dem jeweiligen Betreiber einer Verkaufsräumlichkeit der zukünftige Warenbestand unmittelbar bekannt ist.

Kumulativ bzw. alternativ zu den übrigen, im vorliegenden Zusammenhang als vorteilhaft dargestellten Merkmalskombinationen kann sich ein Verfahren zum Vertrieb von Waren den Kunden mit einer Zentralverwaltung mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass eine Verkaufshandlung ohne einen weiteren manuellen Zwischenschritt von der Verkaufsschnittstelle zu der Lieferantenschnittstelle und/oder über einen separaten Kanal an den von der Verkaufshandlung betroffenen Lieferanten übermittelt wird, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Auch kann sich eine Vorrichtung zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, unabhängig von den übrigen, im vorliegenden Zusammenhang als vorteilhaft erläuterten Merkmalskombinationen dadurch auszeichnen, dass eine Verkaufshandlung in der Zentralverwaltung abgespeichert und unmittelbar über die Lieferantenschnittstelle zugänglich ist, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Hierbei ermöglicht bei einer geeigneten Ausgestaltung der Vorrichtung bzw. des Verfahrens der Verzicht auf einen manuellen Zwischenschritt eine unmittelbare Kenntnis des Lieferanten, der von einer Verkaufshandlung betroffen ist, von der jeweiligen Verkaufshandlung, sodass dieser zum einen seine Lieferantentätigkeit entsprechend abstimmen kann und zum anderen über eine hohe Transparenz hinsichtlich des Eigentums bzw. Besitzstandes der von ihm gelieferten Waren verfügt, was insbesondere dann von Vorteil ist, wenn die Waren beispielsweise auf Provisionsbasis veräußert werden, was jedoch auch in anderem Zusammenhang entsprechende Vorteile bringen kann.

Zwar erweist sich eine Übermittlung einer entsprechenden Verkaufshandlung über die Lieferantenschnittstelle als vorteilhaft, da auf diese Weise ergänzende Schnittstellen oder weitere Tätigkeiten insbesondere des Lieferanten vermieden werden können, da diesem die entsprechenden Daten dann unmittelbar zur Verfügung stehen. Andererseits ist aber denkbar, dass eine Verkaufshandlung, vorzugsweise mit entsprechenden Daten, über einen separaten Kanal, beispielsweise per SMS oder E-Mail, an den Lieferanten übermittelt wird, was insbesondere ergänzend zu einer Übermittlung über die Lieferantenschnittstelle denkbar erscheint.

Auch erweist sich eine Speicherung einer entsprechenden Verkaufshandlung in der Zentralverwaltung als vorteilhaft, insoweit diese unmittelbar über die Lieferantenschnittstelle zugänglich ist, sodass der Lieferant gegebenenfalls, beispielsweise nach Erhalt einer entsprechenden Information über einen separaten Kanal, über seine Lieferantenschnittstelle Daten zu der Verkaufshandlung abfragen kann, was gegebenenfalls auch automatisiert bzw. semiautomatisch erfolgen kann.

Wie bereits vorstehend angedeutet kann - je nach konkreter Umsetzung - eine gute Kontrolle des Warenbestands insbesondere dann, wenn zwei örtlich getrennte Verkaufsräumlichkeiten mit jeweils unterschiedlichen Lieferanten kombiniert werden sollen, eine wichtige Funktionalität zukommen. Zwar kann entsprechendes unmittelbar zwischen der jeweiligen Verkaufsstelle und dem Lieferanten abgewickelt bzw. kommuniziert werden. Über eine zentrale Verwaltung, welche diesbezüglich entsprechend Daten nachhält bzw. abspeichert und über Schnittstellen diesbezüglich zugänglich ist, kann sich jedoch insbesondere dann, wenn eine Vielzahl an unterschiedlichen Lieferanten und Verkaufsräumlichkeiten miteinander entsprechend zusammenarbeiten sollen, als vorteilhaft erweisen, um eine betriebssichere und vertrauensvolle Kommunikation unter Beibehaltung einer möglichst großen Vielzahl an vertraglichen Ausgestaltung zwischen einer Vielzahl unterschiedlicher Verkaufsräumlichkeiten und einer Vielzahl unterschiedlicher Lieferanten in Bezug auf den Handel mit Waren zu ermöglichen.

Dementsprechend kann sich, unabhängig von den übrigen, vorliegend als vorteilhaft beschriebenen Merkmalskombinationen, ein Verfahren zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass in der Zentralverwaltung ein auf wenigstens einen Lieferanten bezogener Warenbestand in wenigstens einer der Verkaufsräumlichkeiten über die Verkaufsschnittstelle nachgehalten und ohne weiteren manuellen Zwischenschritt zu der Lieferantenschnittstelle übermittelt wird, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Kumulativ bzw. alternativ hierzu und unabhängig von den übrigen, vorliegend als vorteilhaft bezeichneten Merkmalskombinationen kann sich, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlichen Lieferanten in Bezug auf den Handel mit Waren zu ermöglichen, eine Vorrichtung zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass in der Zentralverwaltung Warenbestandsdaten wenigstens einer der Verkaufsräumlichkeiten abspeicherbar und über die Verkaufsschnittstelle ausgebbar und änderbar sowie über die Lieferantenschnittstelle ausgebbar sind.

Hierbei kann durch die ohne weiteren manuellen Zwischenschritt erfolgende Übermittlung des Warenbestands bzw. zugehöriger Daten zu der Lieferantenschnittstelle dem Lieferanten jeweils unmittelbar ein Warenbestand - und damit eine möglicherweise sinnvolle Nachlieferung - angezeigt bzw. übermittelt werden.

Insoweit über die Verkaufsschnittstelle entsprechende Warenbestandsdaten über die Verkaufsschnittstelle ausgebbar und änderbar sind, hat der Betreiber einer Verkaufsräumlichkeit zum einen die Möglichkeit, den jeweiligen Warenbestand jeweils zu aktualisieren, was insbesondere bei Verkäufen unmittelbar sinnvoll erscheint. Allerdings kann Letzteres auch beispielsweise bei Retouren oder in einem anderen Situationen sinnvoll sein.

Insoweit die Warenbestandsdaten ergänzend hierzu über die Verkaufsschnittstelle ausgebbar sind, bedarf es an der Verkaufsräumlichkeit keiner separaten Führung des Warenbestands, da diesbezüglich auf die Daten in der Zentralverwaltung zurückgegriffen werden kann.

Die Vorteile, wenn Warenbestandsdaten in der Zentralverwaltung abspeicherbar und über die Lieferantenschnittstelle ausgebbar sind, wurden bereits vorstehend im Detail erläutert. Diese liegen insbesondere darin, dass ein Lieferant zum einen entsprechende Warenbestandsdaten unmittelbar im Zugriff hat und zum anderen eine eigene diesbezügliche Warenwirtschaft bzw. Warenbestandkontrolle nicht verwalten muss.

Vorzugsweise ist der tatsächliche Verkaufspreis über die Verkaufsschnittstelle eingeb- und/oder bestätigbar, sodass eine Verkaufshandlung auf konstruktiv einfache und sichere Weise unter Angabe des Verkaufspreises von der Verkaufsschnittstelle ausgehend übermittelt werden kann. Die Eingabemöglichkeit eines tatsächlichen Verkaufspreises ermöglicht es - je nach konkreter vertraglicher Ausgestaltung der Beziehung zwischen Lieferanten und dem Betreiber der Verkaufsräumlichkeit, dass von einem zuvor ausgemachten Verkaufspreis oder einer unverbindlichen Preisempfehlung abgewichen werden kann, was beispielsweise im Falle längerer Wartezeiten oder auch in kritischen Konkurrenzsituationen vorteilhaft sein kann oder aber auch eine normale Handelssituation, in welcher ein Verkaufspreis ausgehandelt wird, abbilden kann. Ist andererseits der Verkaufspreis fest zwischen Lieferanten und dem Betreiber der Verkaufsräumlichkeit vereinbart, so reicht eine Bestätigung des Verkaufspreises aus, wenn eine entsprechende Verkaufshandlung durchgeführt ist.

Vorzugsweise wird der Ein- bzw. Ausgang von Waren an wenigstens einer Verkaufsräumlichkeit über die Verkaufsschnittstelle abgefragt bzw. eingegeben und an die Zentralverwaltung bzw. an den Lieferanten übermittelt. Auf diese Weise kann insbesondere auch ein Wareneingang bzw. ein aus welchen Gründen auch immer indizierter Warenausgang, beispielsweise aufgrund von zu langen Lagerzeiten und ähnlichem, unmittelbar aktuell in den Warenbestandsdaten, seien diese in der Zentralverwaltung oder aber beim Lieferanten geführt, aktualisiert werden.

Durch eine Abfrage eines Ein- bzw. Ausgangs der Waren, beispielsweise bei einer bereits initiierten Warenlieferung oder auch bei einer Retouren, kann die Betriebssicherheit in der Kommunikation zwischen der Verkaufsräumlichkeit einerseits und der Zentralverwaltung bzw. dem Lieferanten andererseits möglichst betriebssicher ausgestaltet werden.

Kumulativ bzw. alternativ hierzu kann es vorteilhaft sein, wenn eine über die Lieferantenschnittstelle von dem Lieferanten angegebene Warensendung an eine der Verkaufsräumlichkeiten ohne einen weiteren manuellen Zwischenschritt über die Verkaufsschnittstelle der Verkaufsräumlichkeit avisiert wird. Der Betreiber der Verkaufsräumlichkeit weiß dann, dass entsprechende Waren zu ihm unterwegs sind, sodass ein entsprechender Wareneingang dann auch unmittelbar entsprechend angezeigt werden kann, was insbesondere durch die vorstehend erläuterte Abfrage möglichst betriebssicher indiziert werden kann.

Insbesondere kann es vorteilhaft sein, wenn bei der Übermittlung von der Verkaufsschnittstelle zu der Lieferantenschnittstelle und/oder bei der Übermittlung über einen separaten Kanal ohne einen weiteren manuellen Zwischenschritt ein Bestandsabgleich über den Bestand an Waren in der Verkaufsräumlichkeit erfolgt. Auf diese Weise haben sowohl der Lieferant als auch der Betreiber der Verkaufsräumlichkeit einen unmittelbaren Überblick über den aktuellen Warenbestand mit insbesondere den bereits vorstehend erläuterten Vorteilen.

Vorzugsweise kann in Abhängigkeit von dem Ergebnis des Bestandsabgleichs eine entsprechende Bestandsinformation an die Lieferantenschnittstelle und/oder über den separaten Kanal übermittelt werden, sodass insbesondere ein Lieferant unmittelbar über etwaige Aktualisierungen des Warenbestands informiert ist und gegebenenfalls rechtzeitig reagieren kann, um einen ausreichenden Warenbestand vor Ort in der Verkaufsräumlichkeit sicherzustellen. Eine Vorrichtung zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, das mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, kann sich dadurch auszeichnen, dass über die informationstechnische Verkaufsschnittstelle Verkaufsräumlichkeitsdaten der Verkaufsräumlichkeiten in der Zentralverwaltung ablegbar sowie über die informationstechnische Lieferantenschnittstelle abfragbar sind, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten im Bezug auf den Handel mit Waren zu ermöglichen. Im speziellen ermöglicht eine derartige Ausgestaltung bei einer im Übrigen geeigneten Ausgestaltung bzw. Verfahrensführung, dass ein Lieferant über seine informationstechnische Lieferantenschnittstelle Verkaufsräumlichkeitsdaten abfragen kann, um beispielsweise zu prüfen, ob eine bestimmte Verkaufsräumlichkeit über den Vertrieb von Waren des entsprechenden Lieferanten geeignet erscheint.

Kumulativ bzw. alternativ hierzu kann sich eine Vorrichtung zum Vertrieb von Waren an Kunden mit einer Zentralverwaltung und mit wenigstens zwei örtlich getrennten Verkaufsräumlichkeiten, in denen jeweils ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass über die informationstechnische Lieferantenschnittstelle Produktdaten von Produkten in der Zentralverwaltung ablegbar sowie über die informationstechnische Verkaufsschnittstelle abfragbar sind, um unabhängig von den übrigen, vorliegend als vorteilhaft erläuterten Merkmalskombinationen eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Im Konkreten ermöglicht eine derartige Ausgestaltung, bei einer übrigen entsprechend geeigneten Ausgestaltung der jeweiligen Vorrichtung bzw. bei einer entsprechend geeigneten Verfahrensführung im Übrigen, dass ein Bereiber einer Verkaufsräumlichkeit über seine informationstechnische Verkaufsschnittstelle prüfen kann, ob bestimmte Produkte für einen Verkauf in seiner Verkaufsräumlichkeit geeignet erscheinen.

Insbesondere kann über die informationstechnische Verkaufsschnittstelle und/oder über die informationstechnische Lieferantenschnittstelle ein Preis, insbesondere ein Endverkaufspreis, ein empfohlener Verkaufspreis und/oder ein Einkaufspreis, bzw. eine Provision in der Zentralverwaltung ablegbar und/oder abfragbar sein, sodass neben weiteren Produktinformationen, wie beispielsweise einer bildhaften Darstellung oder einer Detailbeschreibung eines Produkts auch essenzielle Informationen hinsichtlich der betriebswirtschaftlichen Gestaltung den jeweiligen Parteien zur Verfügung stehen.

Dementsprechend können, unabhängig von den übrigen, vorliegend als vorteilhaft beschriebenen Merkmalskombinationen sich informationstechnische Schnittstellen zur informationstechnischen Kommunikation einer Verkaufsräumlichkeit mit einer Zentralverwaltung oder einem Lieferanten bzw. eines Lieferanten mit einer Zentralverwaltung oder einer Verkaufsräumlichkeit dadurch auszeichnen, dass die Schnittstelle für eine bidirektionale Kommunikation Daten zu einem Preis, insbesondere zu einem Endverkaufspreis, einem empfohlenen Endverkaufspreis und/oder einem Einkaufspreis, zu einer Provision und/oder zu einem in den Verkaufsräumlichkeitsdaten avisierten Warenbestand bereitstellt, um auf diese Weise einen entsprechenden Informationsaustausch insbesondere zwischen dem Betreiber einer Verkaufsräumlichkeit und einem Lieferanten hinsichtlich essenzieller Informationen für den Vertrieb von Waren zu ermöglichen. Welche dieser Informationen hierbei als essenziell angesehen werden, hängt im Detail von der Art und Weise ab, welche vertragliche Gestaltung die Parteien wünschen.

Insofern kann sich insbesondere ein Verfahren zum Vertrieb von Waren an Kunden mit einer Zentralverwaltung und mit wenigstens zwei örtlich getrennten Verkaufsräumlichkeiten, in denen jeweils wenigstens ein lokales Kassensystem vorgesehen ist, dass mit der Zentralverwaltung über eine informationstechnische Verkaufsschnittstelle verbunden ist, und in denen jeweils Waren unterschiedlicher Lieferanten vorgehalten werden, die jeweils über eine informationstechnische Lieferantenschnittstelle mit der Zentralverwaltung verbunden sind, dadurch auszeichnen, dass vor einer Verkaufshandlung über die Zentralverwaltung eine informationstechnische Verkaufskanalfestlegung zwischen dem Lieferanten und wenigstens einer Verkaufsräumlichkeit eingerichtet wird, über welche für wenigstens ein Produkt zumindest ein Preis und ein in den Verkaufsräumlichkeiten avisierten Warenbestand informationstechnische zwischen dem Lieferanten und den Verkaufsräumlichkeiten festgelegt werden und anschließend entsprechend Waren zu den Verkaufsräumlichkeiten zur dortigen Präsentation geliefert wird, um kumulativ bzw. alternativ zu den übrigen, vorliegend als vorteilhaft dargelegten Merkmalskombinationen eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Eine derartige Verfahrensführung ermöglicht es insbesondere, dass ein Preis, sei dieses ein Endverkaufspreis, ein empfohlener Endverkaufspreis bzw. ein Einkaufspreis, einerseits und ein avisierten Warenbestand andererseits zwischen den Parteien auf technischem Wege vereinbart werden können, sodass es keines sehr großen Aufwandes bedarf, einen Verkaufskanal entsprechend festzulegen. Mit Festlegung eines entsprechenden Verkaufskanals können dann jeweilige Einzelverkäufe und Nachbestellungen entsprechend automatisiert durchgeführt werden.

Insbesondere kann die informationstechnische Verkaufskanalfestlegung in der Zentralverwaltung abgespeichert werden, sodass eine objektive Festlegung der vereinbarten Bedingungen an neutraler Stelle erfolgt, die zudem ergänzende Verwaltungstätigkeiten oder Datenspeichertätigkeiten bei den jeweiligen Lieferanten oder in den jeweiligen Verkaufsräumlichkeiten nicht erzwingt. Insbesondere ergänzend kann eine Abspeicherung auch dezentral, beispielsweise bei dem Lieferanten oder in den Verkaufsräumlichkeiten oder sogar an dritter Stelle, erfolgen. Auch kann eine dezentrale Abspeicherung alternativ zu einer Abspeicherung in der Zentralverwaltung vorgesehen sein, was möglicherweise einer Vertrauensbildung ergänzender Maßnahmen, wie einer Verschlüsselung oder Zertifizierung bedürfen kann.

Insbesondere kann die informationstechnische Verkaufskanalfestlegung als informationstechnisches Saleschannel Relationship in der Zentralverwaltung abgespeichert werden.

Hierbei beschreibt das Saleschannel Relationship insbesondere eine Datenstruktur, welche sämtliche Produkte und die zugehörigen Einzelbearbeitungen in Bezug auf einen bestimmten Lieferant und auf eine bestimmte Verkaufsräumlichkeit reflektiert. Insbesondere kann in dem Saleschannel Relationship eine Sammlung mehrerer selbstständiger Produkt-Placements, welche eine entsprechende Zuordnung für mehrere Produkte entsprechend aufgeschlüsselt, umfasst sein.

Zwischen dem Lieferanten und einer Verkaufsräumlichkeit bzw. dessen Betreiber, kann eine Verkaufskanaldefinition für ein Produkt eingerichtet werden, welche als Teil der informationstechnischen Verkaufskanalfestlegung, insbesondere also des informationstechnischen Saleschannel Relationship, angesehen werden kann. Eine derartige Verkaufskanaldefinition kann insbesondere für ein Produkt, vorzugsweise für genau ein Produkt, erfolgen, sodass eine klare Übersicht über die einzelnen Verkaufskanaldefinition vorliegt.

Insbesondere kann eine Verkaufskanaldefinition für das Produkt zumindest einen Preis und einen in den Verkaufsräumlichkeiten avisierten Warenbestand informationstechnisch zwischen dem Lieferanten und der Verkaufsräumlichkeit festlegen, indem dieses beispielsweise informationstechnisch entsprechend abgespeichert wird. Je nach konkreter Umsetzung können als Preis ein Endverkaufspreis, ein empfohlener Endverkaufspreis o. ä. entsprechend festgelegt sein, was beispielsweise durch die Angabe einer Preisart erfolgen kann. Ebenso können in einer Verkaufskanaldefinition eine Provision oder ein Preisstatus abgespeichert sein.

Insbesondere kann die Verkaufskanaldefinition als ein informationstechnisches Saleschannel Placement abgespeichert sein, was vorzugsweise für ein Produkt, insbesondere für genau ein Produkt, entsprechende Daten vorhält und vorzugsweise dem jeweiligen Lieferanten und der entsprechenden Verkaufsräumlichkeiten zuordnet.

Auf diese Weise kann ein selbstständiger Saleschannel Relationship mehrerer Saleschannel Placements, also verschiedene Einzelvereinbarungen für unterschiedliche Produkte, umfassen.

Vorzugsweise ist die informationstechnische Verkaufskanalfestlegung, insbesondere das informationstechnische Saleschannel Relationship bzw. das informationstechnische Saleschannel Placement, in einem informationstechnische Speicher der Zentralverwaltung abgespeichert, was dementsprechend eine sichere und objektive Abspeicherung der zugehörigen Daten ermöglicht. Alternativ bzw. kumulativ kann jedoch, wie bereits vorstehend angedeutet, auch eine dezentrale Speicherung vorgesehen sein.

Vorzugsweise ist der informationstechnische Speicher der Zentralverwaltung über informationstechnische Schnittstellen von dem Lieferanten bzw. von der Verkaufsräumlichkeit zugänglich, was insbesondere über die Lieferantenschnittstelle bzw. über die Verkaufsschnittstelle erfolgen kann. Auf diese Weise können die Beteiligten, also insbesondere die Lieferanten bzw. die Betreiber der Verkaufsräumlichkeiten, ohne weiteres auf die entsprechenden Daten zugreifen und sich der jeweiligen Vereinbarungen vergewissern.

Wie bereits vorstehend angedeutet kann der Preis beispielsweise ein Endverkaufspreis, ein empfohlener Endverkaufspreis und/oder ein Einkaufspreis sein, was letztlich von der konkreten Vereinbarung zwischen den beiden Parteien abhängt. Insbesondere bei der Festlegung eines Endverkaufspreises kann gegebenenfalls ergänzend eine Provision festgelegt sein, damit der Betreiber einer Verkaufsräumlichkeit auch betriebssicher kalkulieren kann.

Die nachfolgenden exemplarischen Schnittstellenbeschreibungen ermöglichen eine entsprechend informationstechnische Kommunikation zwischen einem Lieferanten und einer Verkaufsräumlichkeit, sei es über eine Zentralverwaltung, unmittelbar oder auf sonstige Weise. Hierbei zeigt der Pfeil → jeweils die Richtung der Schnittstelle an, wobei vorzugsweise als Partner die Zentralverwaltung zu finden ist. Hierbei zeigen die übereinander angeordneten Punkte an, dass an diesen Positionen ggf. weitere Daten als Teil der Schnittstelle in die informationstechnische Kommunikation eingebunden sein können. Kursiv dargestellte Positionen sind in an sich bekannter Weise noch aufgeschlüsselt, was beispielsweise durch entsprechende Flags oder Zähler geschehen kann, um entsprechend größere Mengen an Daten an dieser Position zur Verfügung zu stellen:

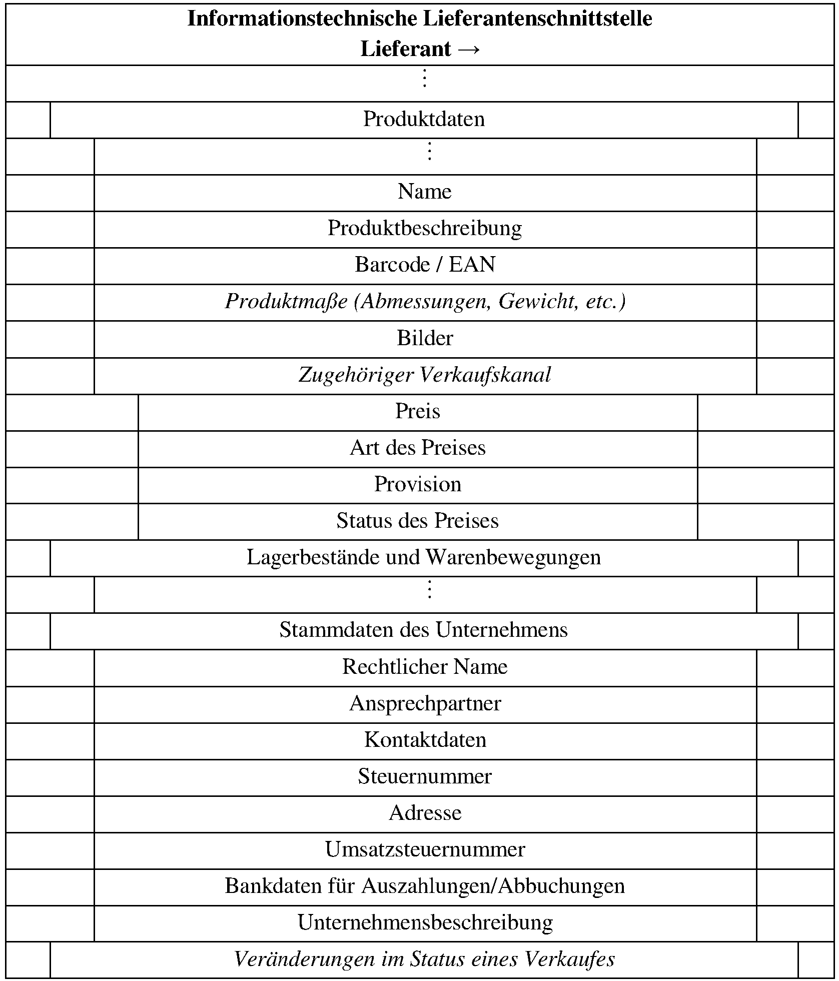

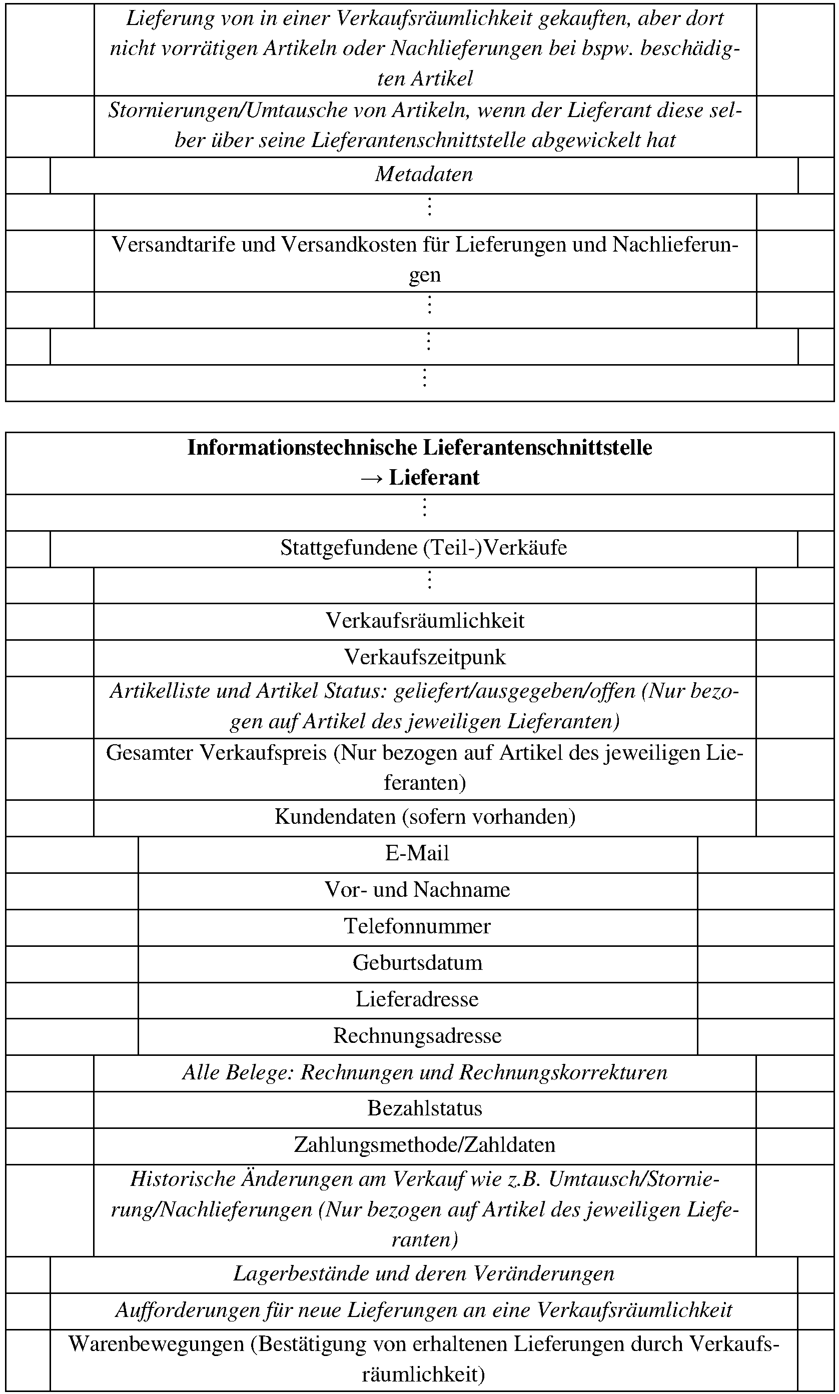

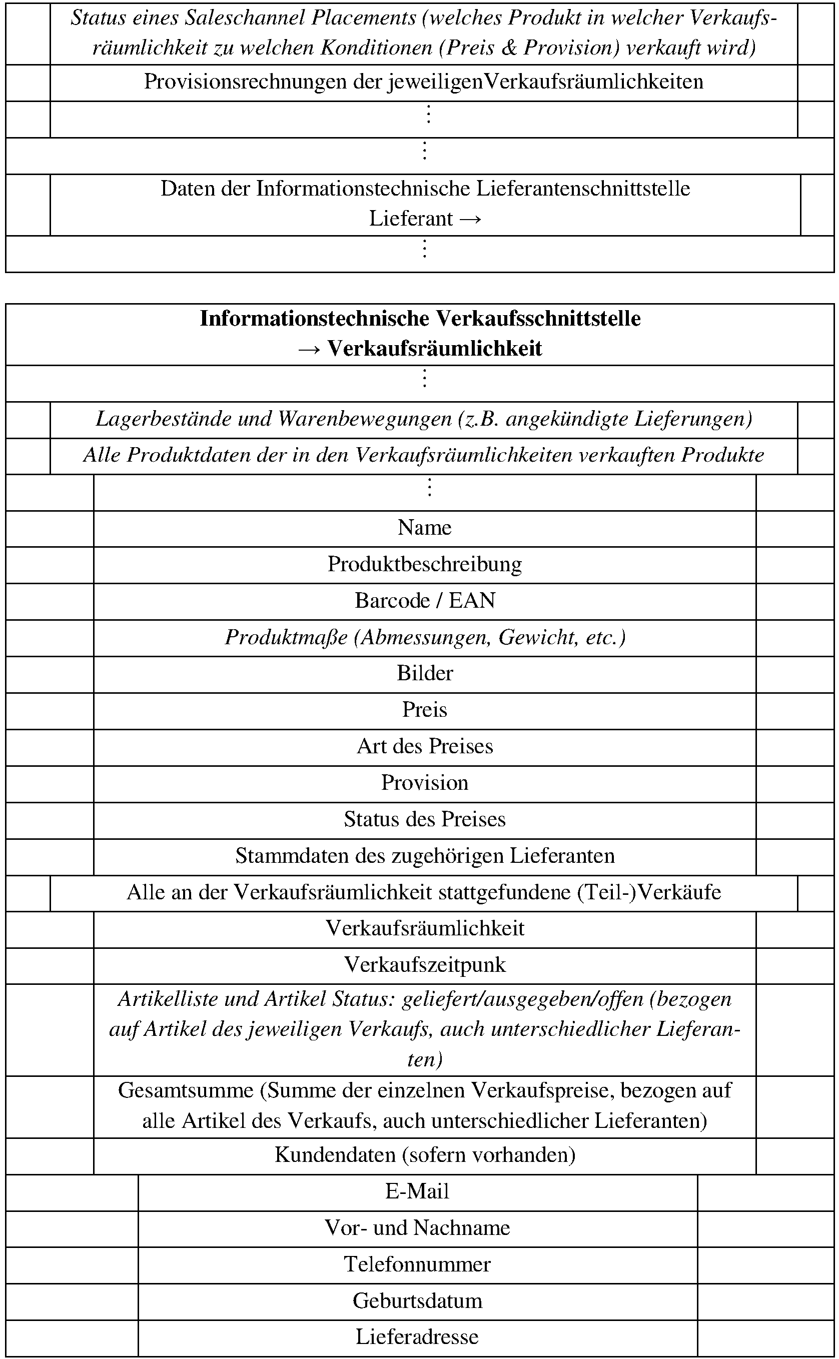

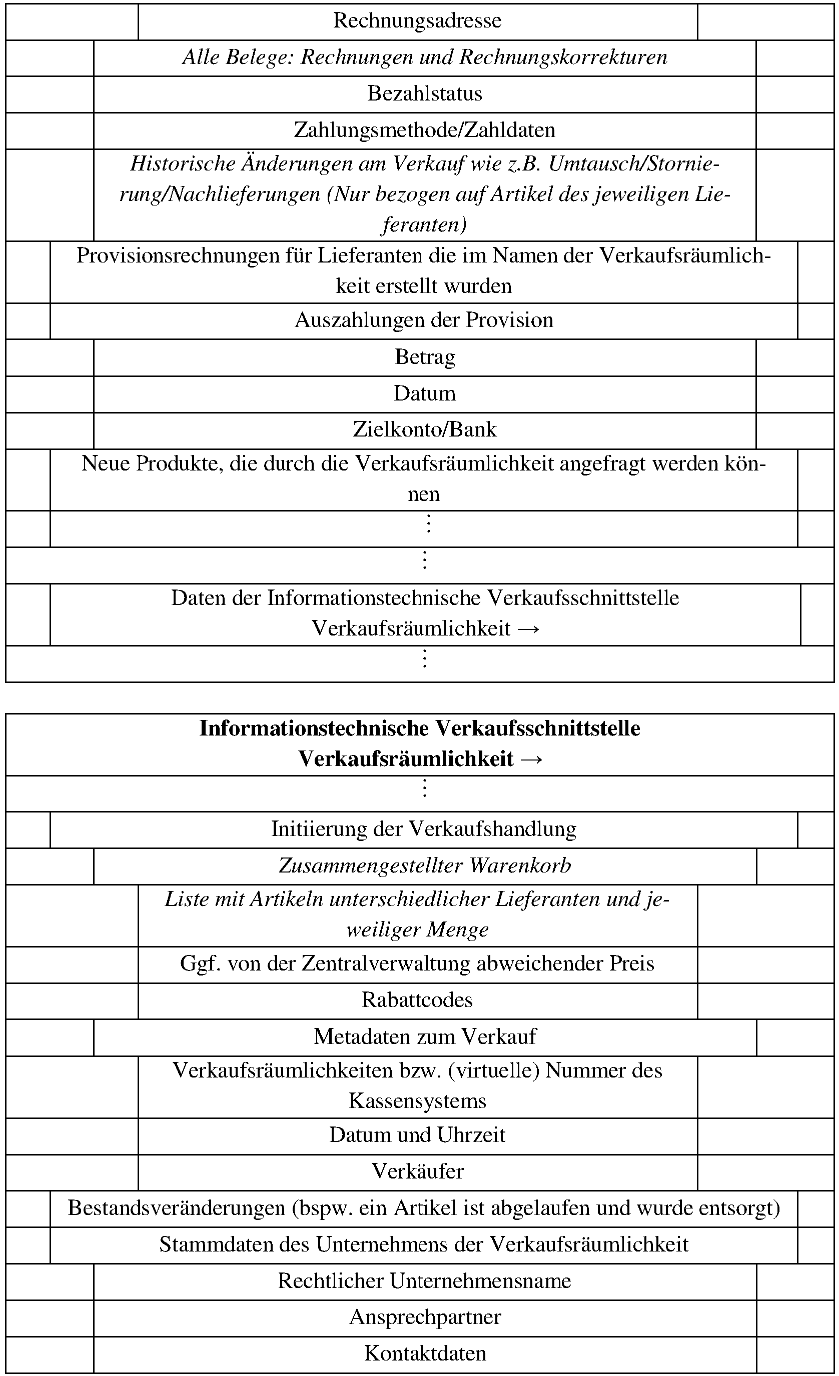

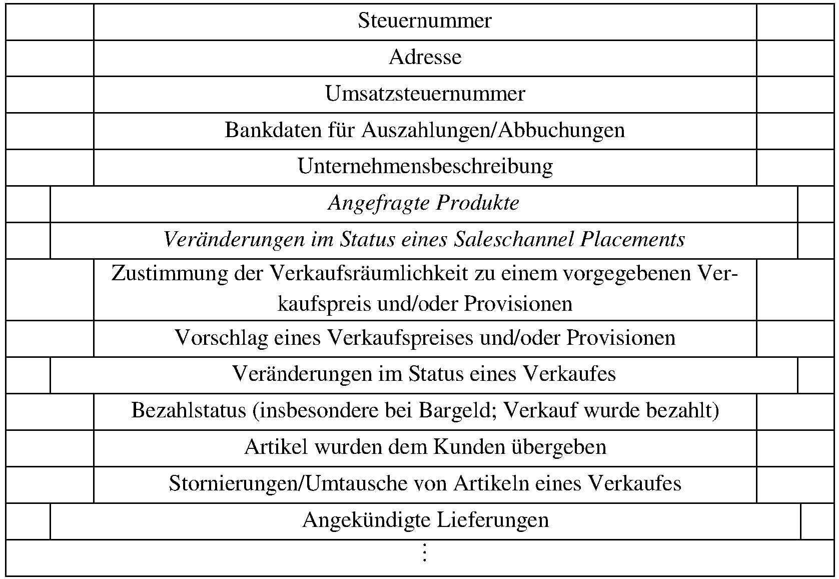

Insbesondere können die informationstechnischen Schnittstellen noch weitere Daten bzw. Datensätze umfassen.

Insbesondere hat sich jedoch als vorteilhaft herausgestellt, wenn zumindest Daten über aktuelle Lieferungen des Lieferanten zu der Verkaufsräumlichkeit über eine informationstechnische Verkaufsschnittstelle, also über eine informationstechnische Schnittstelle zur informationstechnischen Kommunikation einer Verkaufsräumlichkeit mit einer Zentralverwaltung oder mit einem Lieferanten, umfasst sind. Letzteres gilt insbesondere auch für eine informationstechnische Schnittstelle zur informationstechnischen Kommunikation einer Verkaufsräumlichkeit mit einer Zentralverwaltung oder mit einem Lieferanten.

Insbesondere ist es von Vorteil, wenn die jeweiligen Schnittstellen sämtliche Daten, welche von einer Verkaufsräumlichkeit oder von einem Lieferanten zu der Zentralverwaltung bereitgestellt werden bzw. welche von der Verkaufsräumlichkeit bzw. von dem Lieferanten ausgegeben werden, auch für Eingaben zu der Verkaufsräumlichkeit bzw. zu dem Lieferanten bereitstellen, sodass diese Daten beispielsweise in der Zentralverwaltung vorgehalten und jeweils von der Verkaufsräumlichkeit über die informationstechnische Verkaufsschnittstelle bzw. von dem Lieferanten über die informationstechnische Lieferantenschnittstelle abgerufen werden können.

Insbesondere können die Schnittstellen zumindest Daten zu einer getätigten Verkaufshandlung, zu einem zugehörigen Verkaufspreis und zu einem Produktbestand in der Verkaufsräumlichkeit bereitstellen.

**In** diesem Zusammenhang sei darauf hingewiesen, dass die Daten zu einem Produktbestand beispielsweise lediglich eine Bestandsänderung, wie sie beispielsweise durch einen Verkauf bedingt ist, umfassen können. Andererseits ist es denkbar, dass in diesen Daten auch der gesamte Bestand an Waren eines entsprechenden Produkts an einer Verkaufsräumlichkeit beinhaltet sein kann.

Insbesondere ist es auch denkbar, dass eine entsprechende Datenübergabe erfolgt, wenn sich ein entsprechender Warenbestand ändert, ohne dass Verkaufshandlungen vorkommen, wie dieses beispielsweise bei Umtäuschen, Reklamationen, Stornierungen oder Fehllieferungen oder ähnlichen Ereignissen geschehen kann.

Eine informationstechnische Schnittstelle zur informationstechnischen Kommunikation eines Lieferanten mit einer Zentralverwaltung oder einer Verkaufsräumlichkeit bzw. einer Verkaufsräumlichkeit mit einer Zentralverwaltung oder einem Lieferanten kann sich, unabhängig von den übrigen, in vorliegendem Zusammenhang als vorteilhaft dargelegten Merkmalskombinationen, dadurch auszeichnen, dass die Schnittstelle zumindest die für eine Kommunikation von dem Lieferanten bzw. von der Verkaufsräumlichkeit zu der Zentralverwaltung und/oder zu der Verkaufsräumlichkeit bzw. zu dem Lieferanten von der Schnittstelle bereitgestellten Daten auch für eine Kommunikation von der Zentralverwaltung zu dem Lieferanten bzw. zu der Verkaufsräumlichkeit bereitstellt, um eine betriebssichere und vertrauensvolle Kommunikation unter Beibehaltung einer möglichst großen Vielzahl an vertraglichen Ausgestaltungen zwischen einer Vielzahl unterschiedlicher Verkaufsräumlichkeiten und einer Vielzahl unterschiedlicher Lieferanten in Bezug auf den Handel mit Waren zu ermöglichen. Insbesondere ermöglicht eine derartige Ausgestaltung im Konkreten einen verhältnismäßig übersichtlichen Aufbau, da letztlich die Lieferantenschnittstelle bzw. die Verkaufsschnittstelle auch als Schnittstelle von bzw. zu der Zentralverwaltung genutzt werden kann, was - bei einer geeigneten Ausgestaltung der entsprechenden Schnittstellen, der entsprechenden Vorrichtungen bzw. des entsprechenden Verfahrens - auch dann entsprechende Vorteile bringt.

Insbesondere kann die Schnittstelle Daten über aktuelle Lieferungen des Lieferanten zu den Verkaufsräumlichkeiten, zu einer getätigten Verkaufshandlung, zu einem zugehörigen Verkaufspreis und/oder zu einem Warenbestand in der Verkaufsräumlichkeit bidirektional bereitstellen, sodass, wenn entsprechende Daten eingegeben werden, diese auch dem Eingebenden unmittelbar zur Verfügung stehen, sodass diesbezüglich an sich eine eigenständige und ergänzende Datenpflege durch den jeweiligen Eingebenden nicht zwingend erforderlich erscheint.

Der Lieferant bzw. wenigstens einer der Lieferanten kann insbesondere ein Produzent, ein Zwischenhändler oder ein Großhändler sein. Auch Mischformen hiervon sind denkbar, da vorliegend gerade ein flexibler Umgang und eine flexible Anbindung zwischen Lieferanten und Betreibern von Verkaufsräumlichkeit angestrebt ist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: ein System zum Vertrieb von Waren;
- Figur 2: die Speicherung von Saleschannel Placements bzw. Verkaufskanalfestlegungen in einem elektronischen Speicher der Zentralverwaltung nach Figur 1; und
- Figur 3: exemplarisch den Ablauf bei einem Warenverkauf.

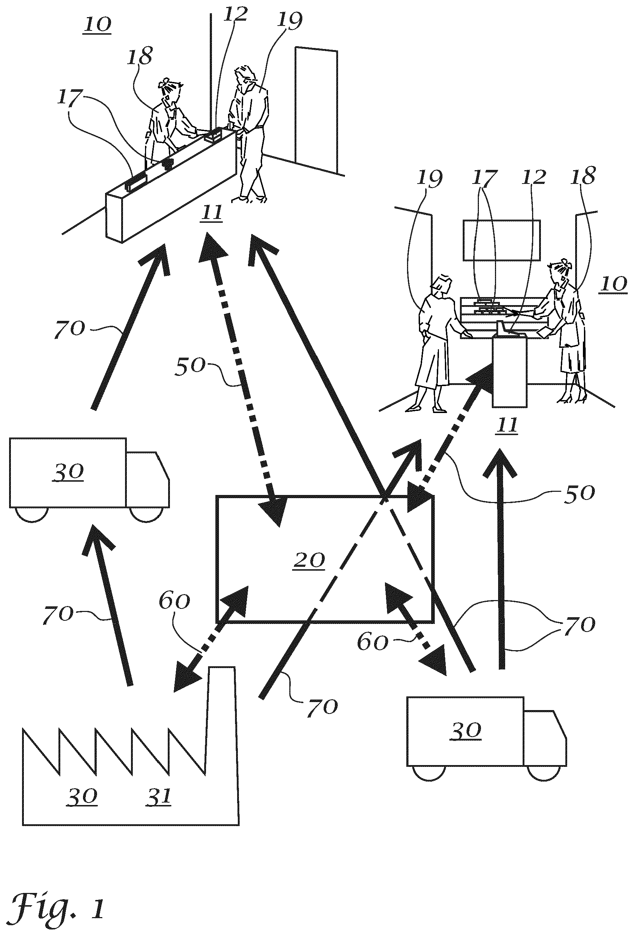

Das in Figur 1 dargestellte System zum Vertrieb von Waren umfasst mehrere Verkaufsräumlichkeiten 10, die jeweils wenigstens einen Verkaufsraum 11 umfassen, wie dieser exemplarisch in Figur 1 dargestellt ist. Es versteht sich, dass die Verkaufsräumlichkeiten 10 ggf. jeweils mehrere Verkaufsräume 11 umfassen können.

In den Verkaufsräumlichkeiten 10 befindet sich jeweils ein Kassensystem 12, wobei es ggf. denkbar ist, dass in einer Verkaufsräumlichkeit 10 auch mehrere Kassensysteme 12 vorgehalten werden. Bei einem Vorhandensein von mehreren Kassensystemen 12 kann es sich als vorteilhaft erweisen, dass diese über eine gemeinsame informationstechnische Verkaufsschnittstelle 50 mit einer Zentralverwaltung 20 kommunizieren, um auf diese Weise Verkaufshandlungen von der Verkaufsschnittstelle 50 in Richtung der Zentralverwaltung 20 bzw. in Richtung einer informationstechnischen Lieferantenschnittstelle 60 zu übermitteln. Bei einer derartigen Ausgestaltung lässt sich ein Warenbestand in den jeweiligen Verkaufsräumlichkeiten 10 auf eine einfache bzw. betriebssichere Weise nachhalten.

Unabhängig hiervon sind jedoch die Verkaufsräumlichkeiten 10 jeweils über eine informationstechnische Verkaufsschnittstelle 50 informationstechnisch mit der Zentralverwaltung 20 verbunden, sodass auf diesem Wege Daten, insbesondere Daten über Verkaufshandlungen oder auf einen Warenbestand bezogenen Daten, übermittelt werden können.

Ebenso sind Lieferanten 30, welche ggf. auch als Produzenten 31 auftreten oder Großhändler bzw. Zwischenhändler sein können, über die informationstechnische Lieferantenschnittstelle 60 mit der Zentralverwaltung 20 verbunden.

In den Verkaufsräumlichkeiten 10 können nunmehr Kunden 19 Waren 17 aussuchen und käuflich erwerben. Je nach konkreter Umsetzung sind diesbezügliche Verkäufer 18, welche beispielsweise auch durch Inhaber bzw. Verantwortliche der Verkaufsräumlichkeiten 10 dargestellt sein können, bei einem Verkauf behilflich. Insbesondere können die Verkäufer 18 dann auch das Kassensystem 12 entsprechend bedienen.

Alternativ ist es jedoch denkbar, dass Kunden 19 selbst Waren 17, die diese käuflich erwerben möchten, aussuchen und einscannen, wodurch ein Warenkorb, insbesondere ein virtueller Warenkorb, gefüllt werden kann, der dann unabhängig von Verkäufern abgerechnet werden kann, indem eine entsprechende Kommunikation über die informationstechnische Verkaufsschnittstelle 50 eingeleitet wird. Diesbezüglich können beispielsweise alle bekannten Diebstahlsicherungen oder ähnliche Maßnahmen, wie beispielsweise eine Überwachung durch Aufsichtspersonal oder Verkäufer 18, genutzt werden, um betrügerische Handlungen oder Fehlbedienungen möglichst zu vermeiden.

Nachfolgend werden exemplarisch verschiedene Verfahrensabläufe stichwortartig aufgeführt, welche zur Vorbereitung einer Verkaufshandlung bzw. bei einer Verkaufshandlung konkret durchgeführt werden können, wobei - je nach konkreter Umsetzung - ggf. auf einzelne dieser Verfahrensschritte verzichtet werden bzw. die Reihenfolge dieser Schritte ggf. auch variieren können:

### Vorbereitung

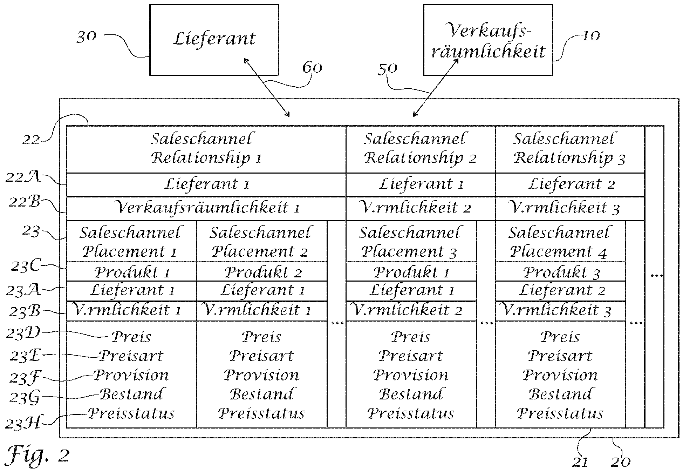

1. Ein Lieferant 30 registriert sich mit seinen Stammdaten in der Zentralverwaltung 20.
2. Der Lieferant 30 hinterlegt seine Produkte mit ihren Produktdaten über die informationstechnische Lieferantenschnittstelle 60 in der Zentralverwaltung 20.
3. Die Verkaufsräumlichkeit 10 registriert sich in der Zentralverwaltung 20 mit ihren Stammdaten.
4. Ein Saleschannel Placement 23 für Produkt 23C des Lieferanten 30,23A und der Verkaufsräumlichkeit 10,23B kommt zustande, in dem a) der Lieferant 30 ein Produkt 23C für eine Verkaufsräumlichkeit 10 anfragt, oder b) die Verkaufsräumlichkeit 10 ein Produkt 23C des Lieferanten 30 anfragt. Auch wäre es denkbar, dass die Zentralverwaltung 20 entsprechende Anfragen startet, um Verkäufe bzw. Saleschannel Placements 23 anzuregen, was auch unabhängig von allen übrigen Merkmalen, die vorliegend als vorteilhaft dargestellt sind, entsprechend vorteilhaft sein. Derartige Anfragen können insbesondere - und dieses ebenfalls unabhängig von den übrigen vorliegend als vorteilhaft dargestellten Merkmalskombinationen - beispielsweise durch Algorithmen oder **KI** gestartet werden, um die Produktvielfalt anzuregen.
5. Die Konditionen eines Saleschannel Placement 23 kommen beispielsweise zustande, in dem a) der Lieferant 30 als Preis 23D für das Produkt 23C einen fixen Verkaufspreis und eine fixe Provision 23F vorgibt und/oder b) die Verkaufsräumlichkeit 10 und der Lieferant 30 als Preis 23D einen fixen Verkaufspreis und eine fixe Provision 23F aushandeln und/oder c) die Verkaufsräumlichkeit 10 und der Lieferant 30 als Preis 23D einen fixen virtuellen Einkaufspreis aushandeln und die Verkaufsräumlichkeit 10 individuell die Verkaufspreise festlegt, wobei in letzterem Fall die Provision, auch wenn nicht fix vereinbart, dann die Differenz aus Verkaufspreis und dem virtuellen Einkaufspreis ist, und/oder d) die Verkaufsräumlichkeit 10 und der Lieferant 30, beispielsweise durch die Zentralverwaltung 20, vorgeschlagene oder vorgegebene Konditionen bestätigen. Es versteht sich, dass an dieser Stelle auch weitere bzw. alternative Festlegungen vorgesehen sein können. Die jeweilige Art des Preise 23D kann über die Preisart 23E als Endverkaufspreis, als empfohlener Endverkaufspreis oder ähnliche festgelegt werden, um auf diese Weise die entsprechenden Konditionen zu fixieren, wie dieses insbesondere in Figur 2 exemplarisch dargelegt ist. Über eine Preisstatus 23H kann beispielsweise festgehalten werden, ob sich die Parteien auf einen Preis und die übrigen Konditionen eines Saleschannel Placements 23 geeinigt haben, so dass der Stand der Verhandlungen in dem Saleschannel Placements 23 vorzugsweise widergespiegelt werden kann.
6. Ein Warenbestand 23G wird durch a) die Zentralverwaltung 20 und/oder b) den Lieferanten 30 und/oder c) die Verkaufsräumlichkeit 10 festgelegt.
7. Der Lieferant 30 liefert die Waren 17 entsprechend des vereinbarten Warenbestands 23G zu der Verkaufsräumlichkeit 10.
8. Die Verkaufsräumlichkeit 10 quittiert über die informationstechnische Verkaufsschnittstelle 50 die erhaltenen Waren 17 und eventuelle Abweichungen der angekündigten Mengen, bspw. aufgrund von Lieferschäden, Fehlern bei der Kommissionierung oder Ähnlichem.

### Verkaufshandlung

1. Ein Kunde 19 möchte eine oder mehrere Waren 17 in der Verkaufsräumlichkeit 10 kaufen. Die Waren 17 können dabei von verschiedenen Lieferanten 30 stammen.
2. Der Warenkorb wird mit Produkten bzw. Waren 17, die der Kunde kaufen möchte, sofern die Produkte vorrätig sind, physisch in der Verkaufsstelle zusammengestellt.
3. Ein virtueller Warenkorb wird dabei erfasst a) durch einen Verkäufer 18, der das Kassensystem 12 bedient, und/oder b) durch eine Selbstbedienungskasse und/oder c) durch ein digitales Endgerät des Kunden 19 und/oder d) durch automatische Erfassungsmechanismen, wie beispielsweise Kameras, RFIDs oder ähnliches, und/oder e) durch sonstige Erfassungsmöglichkeiten und über die informationstechnische Verkaufsschnittstelle 50 an die Zentralverwaltung 20 weitergeleitet.
4. Der Gesamtpreis wird berechnet a) durch die Zentralverwaltung 20 auf Basis der in der Zentralverwaltung 20 hinterlegten Preise 23D und/oder b) auf Basis der durch die informationstechnische Verkaufsschnittstelle 50 mitgegebenen Preise 23D entsprechend der jeweiligen Angebote der jeweiligen Lieferanten 30.
5. Der Kunde 19 zahlt a) bargeldlos und/oder b) mit Bargeld und/oder c) bargeldähnlichen Zahlungsmitteln, wobei der Vorgang wird über die informationstechnische Verkaufsschnittstelle 50 in der Zentralverwaltung 20 hinterlegt werden kann.
6. Der Verkauf bzw. die Verkäufe können, je nach konkreter Umsetzung, im Namen der Verkaufsräumlichkeit 10 oder im Namen der jeweiligen Lieferanten 30 unter Vermittlung der Verkaufsräumlichkeit 10 zustande kommen.
7. Die Zentralverwaltung 20 teilt die Verkaufshandlung in Teilverkäufe zu den jeweiligen Produkten der jeweiligen Lieferanten 30 auf, da der Kunde 19 ggf. rechtlich gesehen bei jedem Lieferanten 30 einzeln gekauft hat bzw. da Verkaufshandlungen der Verkaufsräumlichkeit 10 nur jeweils für die von einem bestimmten Lieferanten 30 stammende Produkte für die zugehörigen Lieferanten von Interesse sind.
8. Die Teilverkäufe sind für die jeweiligen Lieferanten 30 über die informationstechnische Lieferantenschnittstelle 60 einsehbar bzw. werden den Lieferanten 30 über diese Lieferantenschnittstelle 60 geliefert bzw. bereitgestellt. Diese können optional über den neuen Verkauf informiert werden, wobei ggf. diesbezüglich auch ein separater Kanal, wie beispielsweise eine separate E-Mail genutzt werden kann.
9. Der Kunde 19 erhält über die informationstechnische Verkaufsschnittstelle 50 und den Verkäufer 18 bzw. die Verkaufsräumlichkeit 10 die verschiedenen Belege über die Teilverkäufe, die a) die Zentralverwaltung 20 im Namen der Lieferanten (30 oder Verkaufsräumlichkeit 10 erstellt hat und/oder b) ein an die Zentralverwaltung 20 angeschlossenes System eines jeweiligen Lieferanten 30 erstellt hat.
10. Die Zentralverwaltung 20 übernimmt die Aufteilung des Geldes entsprechend der Teilverkäufe und leitet es an die jeweiligen Lieferanten 30 weiter.
11. Die Zentralverwaltung 20 errechnet ggf. die jeweiligen Provisionen für die Teilverkäufe und leitet diese von den Lieferanten 30 an die Verkaufsräumlichkeit 10 weiter, die den Verkauf abgewickelt hat.
12. Die Zentralverwaltung 20 aktualisiert die zu der jeweiligen Verkaufsräumlichkeit 10 zugehörigen Lagerbestände.

### Nachbereitung

- Sollten Lagerbestände unter jeweilige kritische Werte fallen, löst a) die Zentralverwaltung 20 und/oder b) die Verkaufsräumlichkeit 10 und/oder c) der Lieferant 30 eine neue Warenlieferung an die Verkaufsräumlichkeit 10 aus. Anschließend folgen die Punkte 7 und 8 aus der Vorbereitung.
- Nachträgliche Änderungen eines Verkaufs wie z.B. Umtausch/Stornierung/Rabattierung können insbesondere entweder a) durch die Verkaufsräumlichkeit 10 über die informationstechnische Verkaufsschnittstelle 50 und/oder b) durch den Lieferanten 30 über die informationstechnische Lieferantenschnittstelle 60 und/oder c) durch die Zentralverwaltung 20 abgewickelt werden:
   1. Dabei werden die Änderungen, beispielsweise eine umgetauschte oder stornierte Ware 17 und/oder Mengen und/oder Preise über die informationstechnische Verkaufsschnittstelle 50 und/oder die informationstechnische Lieferantenschnittstelle 60 eingegeben.
   2. Die Zentralverwaltung 20 aktualisiert entsprechend alle Teilverkäufe und die Gesamtsumme bzw. Gesamtsummen. Dabei werden alle Geldbewegungen und Lagerbestände aktualisiert und ggf. weitere Belege, wie z.B. Rechnungskorrekturen, erstellt.
   3. Die Änderungen und Aktualisierungen sind über die informationstechnische Verkaufsschnittstelle 50 und/oder die informationstechnische Lieferantenschnittstelle 60 einsehbar.
- Sofern sich die Konditionen eines Saleschannel Placements 23 ändern sollen, so können neue Konditionen zustande kommen, indem a) der Lieferant 30 und die Verkaufsräumlichkeit 10 neue Konditionen aushandeln und beide jeweils über die informationstechnische Verkaufsschnittstelle 50 bzw. die informationstechnische Lieferantenschnittstelle 60 die neuen Konditionen hinterlegen und/oder den neuen Konditionen zustimmen bzw. indem b) die Zentralverwaltung 20 neue Konditionen - beispielsweise auf Basis von Algorithmen oder KI - vorschlägt oder vorgibt.
- Sofern Produkte nicht mehr in einer Verkaufsräumlichkeit 10 verkauft werden sollen, so können diese initiiert durch a) die Zentralverwaltung 20, und/oder b) den Lieferanten 30 und/oder c) die Verkaufsräumlichkeit 10 an den Lieferanten 30 zurückgeliefert werden. Die Warenbewegungen werden dabei über die informationstechnische Lieferantenschnittstelle 60 und/oder die informationstechnische Verkaufsschnittstelle 50 in der Zentralverwaltung 20 vermerkt und die Lagerbestände aktualisiert.

Wie insbesondere in Figur 2 exemplarisch dargestellt, kann in der Zentralverwaltung 20 ein elektronischer Speicher 21 vorgesehen sein, in welchem Salechannel Relationships 22 für eine Verkaufskanalfestlegung zwischen dem Lieferanten 30,22A und wenigstens einer Verkaufsräumlichkeit 10,22B eingerichtet werden.

Bei vorliegendem Ausführungsbeispiel wird innerhalb eines Salechannel Relationships 22 eine Verkaufskanalfestlegung als ein informationstechnisches Salechannel Placement 23 im Rahmen einer Verkaufskanaldefinition als informationstechnische Verkaufskanalfestlegung eingerichtet, über welche für ein Produkt 23C zumindest ein Preis 23D und ein in dem Verkaufsräumlichkeiten 10 avisierter Warenbestand 23G informationstechnisch zwischen dem Lieferanten 30,23A und der Verkaufsräumlichkeit 10,22B festgelegt, indem sich diese beiden auf entsprechenden Konditionen einigen.

Hierbei wird bei vorliegendem Ausführungsbeispiel auch eine Preisart 23E des Preises 23D festgelegt, sodass zwischen dem Lieferanten 30,23A und der Verkaufsräumlichkeit 10, 3B Einigkeit darüber besteht, ob der vereinbarte Preis 23D ein Einkaufspreis, ein empfohlener Endverkaufspreis oder ein Endverkaufspreis ist.

Darüber hinaus ist optional in dem Speicher 21 bzw. für ein Salechannel Placement 23 die Vereinbarung einer Provision 23F für die Verkaufsräumlichkeiten 10 vorgesehen, was insbesondere bei der Vereinbarung von Endverkaufspreisen als Preis 23D vorteilhaft erscheint.

Bei vorliegendem Ausführungsbeispiel wird darüber hinaus bei einem Salechannel Placement 23 ein Preisstatus 23H festgelegt, welcher festhält, ob der zugehörige Lieferant 30,23A und die zugehörige Verkaufsräumlichkeit 10,23B sich auf Preis 23D, Preisart 23E, ggf. eine Provision 23F, sowie Warenbestand 23G geeinigt haben.

Mehrere Salechannel Placements 23 können dann zu einem Salechannel Relationship 22 zusammengefasst werden, sodass ein Überblick über sämtliche Produkte 23C, welche zwischen einem Lieferanten 23A und einer Verkaufsräumlichkeit 23B im Rahmen von Salechannel Placements 23 vereinbart sind, vorliegt.

Entsprechend kann auch eine Abspeicherung in dem elektronischen Speicher 21 erfolgen.

Alternativ bzw. ergänzend könnten, wenn dieses gewünscht ist, lokale Speicher vorgesehen sein, beispielsweise bei einem oder mehreren Lieferanten 30 oder bei einer oder mehreren Verkaufsräumlichkeiten 10.

Über entsprechende Produktwege 70 werden dann Waren 17 entsprechend der Erfahrungen zwischen den zugehörigen Lieferanten 30 und den Verkaufsräumlichkeiten 10 übermittelt.

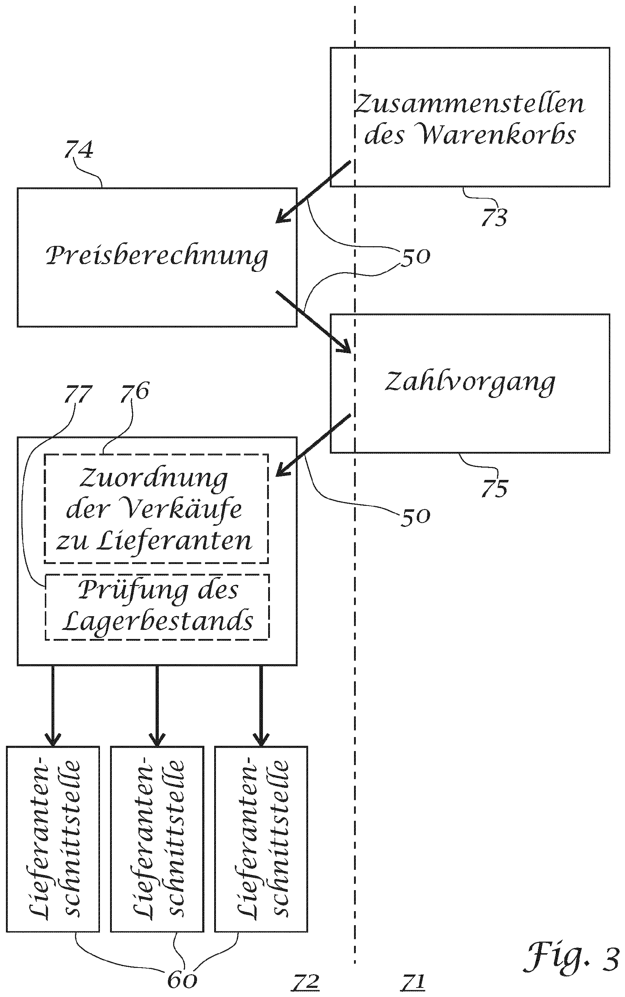

Bei einer Verkaufshandlung, wie dieses beispielhaft in Figur 3 dargestellt ist, wird zunächst manuell 71 ein Warenkorb zusammengestellt 73. Es erfolgt dann eine informationstechnische Übermittlung des zusammengestellten Warenkorbs über die informationstechnische Verkaufsschnittstelle 50, sodass in der Zentralverwaltung 20, ggf. auch bei den einzelnen Lieferanten 30, eine Preisberechnung 74 erfolgen kann, was automatisch bzw. informationstechnisch 72 durchgeführt wird.

Insofern erfolgt vorliegend ein informationstechnischer 72 Prozess einerseits und ein tatsächlicher bzw. gegenständlich oder manueller 71 Prozess anderseits, die letztlich einander abbilden bzw. Hand in Hand gehen. Insofern wäre es auch denkbar, dass zunächst ein informationstechnischer Warenkorb erstellt wird, beispielsweise wenn ein Kunde 19 genau weiß, welche Waren 17 er gerne hätte. Anhand dieses Warenkorbs kann dann ein manueller 71 Warenkorb zusammengestellt 73 werden. Andererseits triggern die manuellen 71 Tätigkeiten jeweils automatisierte informationstechnische Abläufe.

Ein bei einer Preisberechnung 74 berechneter Preis wird über die informationstechnische Verkaufsschnittstelle 50 der jeweiligen Verkaufsräumlichkeit 10 für einen Zahlungsvorgang 75 zur Verfügung gestellt, welcher - naturgemäß - manuelle 71 Anteile, insbesondere die Zustimmung eines Kunden 19 zu dem berechneten Preis und der tatsächlichen Übergabe von Geld umfasst.

Ist der Zahlungsvorgang 75 ausgeführt, so erfolgt eine Übermittlung der Verkaufshandlung über die informationstechnische Verkaufsschnittstelle 50 zu der Zentralverwaltung 20, in welcher eine Zuordnung 76 der Verkäufe zu den einzelnen Lieferanten 30, welche von der jeweiligen Verkaufshandlung betroffen sind, vorgenommen wird. Ebenso erfolgt dort eine Prüfung 77 des Lagerbestands der von der Verkaufshandlung erfassten Waren in Abhängigkeit von den einzelnen Lieferanten 30.

Sowohl die Zuordnung 76 der Verkäufe zu den Lieferanten 30 als auch die Prüfung 77 der Lagerbestände erfolgt in informationstechnischer 72 Weise automatisch, sodass ohne einen weiteren manuellen Zwischenschritt von dem Zahlvorgang 75 eine entsprechende Ausgabe über die informationstechnische Lieferantenschnittstelle 60, nachfolgend der Zuordnung 76 und der Prüfung 77, erfolgen kann.

### Bezugszeichenliste:

- 10: Verkaufsräumlichkeit
- 11: Verkaufsraum
- 12: Kassensystem
- 17: Ware
- 18: Verkäufer
- 19: Kunde

- 20: Zentralverwaltung
- 21: elektronischer Speicher
- 22: Saleschannel Relationship
- 22A: Lieferant eines Saleschannel Relationships 22
- 22B: Verkaufsräumlichkeit eines Saleschannel Relationships 22
- 23: Saleschannel Placement in dem Speicher 21
- 23A: Lieferant eines Saleschannel Placement 23
- 23B: Verkaufsräumlichkeit eines Saleschannel Placement 23
- 23C: Produkt eines Saleschannel Placement 23
- 23D: Preis eines Saleschannel Placement 23
- 23E: Preisart eines Saleschannel Placement 23
- 23F: Provision eines Saleschannel Placement 23
- 23G: Warenbestand eines Saleschannel Placement 23
- 23H: Preisstatus eines Saleschannel Placement 23

- 30: Lieferant
- 31: Produzent

- 50: informationstechnische Verkaufsschnittstelle

- 60: informationstechnische Lieferantenschnittstelle

- 70: Produktweg
- 71: manuell
- 72: informationstechnisch
- 73: Zusammenstellen des Warenkorbs
- 74: Preisberechnung
- 75: Zahlungsvorgang
- 76: Zuordnung der Verkäufe zu Lieferanten
- 77: Prüfung des Lagerbestands

## Patentansprüche

1. Verfahren zum Vertrieb von Waren (17) an Kunden (19) mit einer Zentralverwaltung (20) und mit wenigstens zwei örtlich getrennten Verkaufsräumlichkeiten (10), in denen jeweils wenigstens ein lokales Kassensystem (12) vorgesehen ist, das mit der Zentralverwaltung (20) über eine informationstechnische Verkaufsschnittstelle (50) verbunden ist, und in denen jeweils Waren (17) unterschiedlicher Lieferanten (30) vorgehalten werden, die jeweils über eine informationstechnische Lieferantenschnittstelle (60) mit der Zentralverwaltung (20) verbunden sind, **dadurch gekennzeichnet,**
(i) **dass** eine Verkaufshandlung in einer Verkaufsräumlichkeit (10) über die oder von der Verkaufsschnittstelle (50) zu der Lieferantenschnittstelle (60) unter Angabe des Verkaufspreises übermittelt wird und/oder **dass** eine Verkaufshandlung ohne einen weiteren manuellen Zwischenschritt von der Verkaufsschnittstelle (50) zu der Lieferantenschnittstelle (60) und/oder über einen separaten Kanal an den von der Verkaufshandlung betroffenen Lieferanten (30) übermittelt wird; und/oder
(ii) **dass** vor einer Verkaufshandlung über die Zentralverwaltung (20) eine informationstechnische Verkaufskanalfestlegung zwischen dem Lieferanten (30) und wenigstens einer Verkaufsräumlichkeit (10) eingerichtet wird, über welche für wenigstens ein Produkt (23C) zumindest ein Preis (23D) und ein in den Verkaufsräumlichkeiten (10) avisierter Warenbestand (23G) informationstechnisch zwischen dem Lieferanten (30; 23A) und den Verkaufsräumlichkeiten (10; 23B) festgelegt werden und anschließend entsprechend Waren (17) zu den Verkaufsräumlichkeiten (10) zur dortigen Präsentation geliefert werden;
(iii) **dass** in der Zentralverwaltung (20) ein auf wenigstens einen Lieferanten (30) bezogener Warenbestand in wenigstens einer der Verkaufsräumlichkeiten (10) über die Verkaufsschnittstelle (50) nachgehalten und ohne weiteren manuellen Zwischenschritt zu der Lieferantenschnittstelle (60) übermittelt wird.

2. Verfahren nach Anspruch 1, **dadurch gekennzeichnet, dass** die Verkaufshandlung in der Zentralverwaltung (20) abgespeichert wird.

3. Verfahren nach Anspruch 1 oder 2, **dadurch gekennzeichnet, dass** die Übermittlung über den separaten Kanal per E-Mail erfolgt.

4. Verfahren nach einem der Ansprüche 1 bis 3, **dadurch gekennzeichnet, dass** bei der Übermittlung von der Verkaufsschnittstelle (50) zu der Lieferantenschnittstelle (60) und/oder bei der Übermittlung über einen separaten Kanal ohne einen weiteren manuellen Zwischenschritt ein Bestandsabgleich über den Bestand an Waren in der Verkaufsräumlichkeit (10) erfolgt und vorzugsweise in Abhängigkeit von dem Ergebnis des Bestandsabgleichs eine entsprechende Bestandsinformation an die Lieferantenschnittstelle (60) und/oder über den separaten Kanal übermittelt wird.

5. Verfahren nach einem der Ansprüche 1 bis 4, **dadurch gekennzeichnet, dass** die informationstechnische Verkaufskanalfestlegung, insbesondere als informationstechnisches Saleschannel Relationship (22), in der Zentralverwaltung (20) abgespeichert wird.

6. Verfahren nach einem der Ansprüche 1 bis 5, **dadurch gekennzeichnet, dass** für ein Produkt, insbesondere für genau ein Produkt, eines Lieferanten (30) zwischen dem Lieferanten (30) und einer Verkaufsräumlichkeit (10) eine Verkaufskanaldefinition, insbesondere als ein informationstechnisches Saleschannel Placement (23), als informationstechnische Verkaufskanalfestlegung eingerichtet wird, über welche für das Produkt (23C) zumindest ein Preis (23D) und ein in den Verkaufsräumlichkeiten avisierter Warenbestand (23G) informationstechnisch zwischen dem Lieferanten (30; 23A) und der Verkaufsräumlichkeit (10; 22B) festgelegt werden.

7. Verfahren nach Anspruch 5 oder 6, **dadurch gekennzeichnet, dass** die informationstechnische Verkaufskanalfestlegung, insbesondere das informationstechnische Saleschannel Relationship (22) bzw. das informationstechnische Saleschannel Placement (23), in einem informationstechnischen Speicher (21) der Zentralverwaltung (20) abgespeichert wird, der vorzugsweise über informationstechnische Schnittstellen (50, 60) von dem Lieferanten (30) und/oder von der Verkaufsräumlichkeit (10), wie insbesondere über die Lieferantenschnittstelle (60) und/oder über die Verkaufsschnittstelle (50), zugänglich ist.

8. Verfahren nach einem der Ansprüche 1 bis 7, **dadurch gekennzeichnet, dass** der Preis (23D) ein Endverkaufspreis, ein empfohlener Endverkaufspreis und/oder ein Einkaufspreis ist, wobei insbesondere bei Festlegung eines Endverkaufspreises ggf. ergänzend eine Provision (23F) festgelegt wird.

9. Verfahren nach einem der Ansprüche 1 bis 8, **dadurch gekennzeichnet, dass** der Ein- bzw. Ausgang von Waren (17) an wenigstens einer Verkaufsräumlichkeit (10) über die Verkaufsschnittstelle (50) abgefragt bzw. eingegeben und an die Zentralverwaltung (20) übermittelt wird und/oder dass eine über die Lieferantenschnittstelle (60) von dem Lieferanten (30) angegebene Warensendung an eine der Verkaufsräumlichkeiten (10) ohne einen weiteren manuellen Zwischenschritt über die Verkaufsschnittstelle (50) der Verkaufsräumlichkeit (10) avisiert wird.

10. Vorrichtung zum Vertrieb von Waren (17) an Kunden (19) mit einer Zentralverwaltung (20) und mit wenigstens zwei örtlich getrennten Verkaufsräumlichkeiten (10), in denen jeweils wenigstens ein lokales Kassensystem (12) vorgesehen ist, das mit der Zentralverwaltung (20) über eine informationstechnische Verkaufsschnittstelle (50) verbunden ist, und in denen jeweils Waren (17) unterschiedlicher Lieferanten (30) vorgehalten werden, die jeweils über eine informationstechnische Lieferantenschnittstelle (60) mit der Zentralverwaltung (20) verbunden sind, **dadurch gekennzeichnet,**
(i) **dass** in der Zentralverwaltung (20) sowohl ein vorgegebener Preis (23D) als auch ein tatsächlicher Verkaufspreis abspeicherbar und sowohl über die Lieferantenschnittstelle (60) als auch über die Verkaufsschnittstelle (50) zugänglich ist und/oder **dass** eine Verkaufshandlung in der Zentralverwaltung (20) abgespeichert und unmittelbar über die Lieferantenschnittstelle (60) zugänglich ist; und/oder
(ii) **dass** über die informationstechnische Verkaufsschnittstelle (50) Verkaufsräumlichkeitsdaten der Verkaufsräumlichkeiten (10) in der Zentralverwaltung (20) ablegbar sowie über die informationstechnische Lieferantenschnittstelle (60) abfragbar sind und/oder **dass** über die informationstechnische Lieferantenschnittstelle (60) Produktdaten von Produkten (23C) in der Zentralverwaltung (20) ablegbar sowie über die informationstechnische Verkaufsschnittstelle (50) abfragbar sind und/oder
(iii) **dass** in der Zentralverwaltung (20) Warenbestandsdaten wenigstens einer der Verkaufsräumlichkeiten (10) abspeicherbar und über die Verkaufsschnittstelle (50) ausgebbar und änderbar sowie über die Lieferantenschnittstelle (60) ausgebbar sind.

11. Vorrichtung nach Anspruch 10, **dadurch gekennzeichnet, dass** der tatsächliche Verkaufspreis über die Verkaufsschnittstelle (50) eingeb- und/oder bestätigbar ist.

12. Vorrichtung nach Anspruch 10 oder 11, **dadurch gekennzeichnet, dass** über die informationstechnische Verkaufsschnittstelle (50) und/oder über die informationstechnische Lieferantenschnittstelle (60) der Preis (23D), insbesondere ein Endverkaufspreis, ein empfohlener Endverkaufspreis und/oder ein Einkaufspreis, und/oder eine Provision (23F) in der Zentralverwaltung (20) ablegbar und/oder abfragbar ist.

13. Informationstechnische Schnittstelle zur informationstechnischen Kommunikation eines Lieferanten (30) mit einer Zentralverwaltung (20) oder einer Verkaufsräumlichkeit (10), **dadurch gekennzeichnet,**
(i) **dass** die Schnittstelle für eine Kommunikation von dem Lieferanten (30) zu der Zentralverwaltung (20) und/oder zu der Verkaufsräumlichkeit (10) zumindest Daten über aktuelle Lieferungen des Lieferanten (30) zu den Verkaufsräumlichkeiten (10) bereitstellt; und/oder
(ii) **dass** die Schnittstelle für eine Kommunikation von der Verkaufsräumlichkeit (10) und/oder von der Zentralverwaltung (20) zu dem Lieferanten (30) zumindest Daten zu einer getätigten Verkaufshandlung, zu einem zugehörigen Verkaufspreis und zu einem Warenbestand in den Verkaufsräumlichkeiten (10) bereitstellt; und/oder
(iii) **dass** die Schnittstelle für eine bidirektionale Kommunikation Daten zu einem Preis (23D), insbesondere zu einem Endverkaufspreis, einem empfohlenen Endverkaufspreis und/oder einem Einkaufspreis, zu einer Provision (23F) und/oder zu einem in den Verkaufsräumlichkeiten (10) avisierten Warenbestand (23G) bereitstellt; und/oder
(iv) **dass** die Schnittstelle zumindest die für eine Kommunikation von dem Lieferanten (30) zu der Zentralverwaltung (20) und/oder zu der Verkaufsräumlichkeit (10) von der Schnittstelle bereitgestellten Daten auch für eine Kommunikation von der Zentralverwaltung (20) zu dem Lieferanten (30) bereitstellt.

14. Informationstechnische Schnittstelle zur informationstechnischen Kommunikation einer Verkaufsräumlichkeit (10) mit einer Zentralverwaltung (20) oder einem Lieferanten (30), **dadurch gekennzeichnet,**
(i) **dass** die Schnittstelle für eine Kommunikation von dem Lieferanten (30) zu der Zentralverwaltung (20) und/oder zu der Verkaufsräumlichkeit (10) zumindest Daten über aktuelle Lieferungen des Lieferanten (30) zu der Verkaufsräumlichkeit (10) bereitstellt; und/oder
(ii) **dass** die Schnittstelle für eine Kommunikation von der Verkaufsräumlichkeit (10) zu der Zentralverwaltung (20) und/oder zu dem Lieferanten (30) zumindest Daten zu einer getätigten Verkaufshandlung, zu einem zugehörigen Verkaufspreis und zu einem Produktbestand in der Verkaufsräumlichkeit (10) bereitstellt; und/oder
(iii) **dass** die Schnittstelle für eine bidirektionale Kommunikation Daten zu einem Preis (23D), insbesondere zu einem Endverkaufspreis, einem empfohlenen Endverkaufspreis und/oder einem Einkaufspreis, zu einer Provision (23F) und/oder zu einem in den Verkaufsräumlichkeiten (10) avisierten Warenbestand (23G) bereitstellt; und/oder
(iv) **dass** die Schnittstelle zumindest die für eine Kommunikation von der Verkaufsräumlichkeit (10) zu der Zentralverwaltung (20) und/oder zu dem Lieferanten (30) von der Schnittstelle bereitgestellten Daten auch für eine Kommunikation von der Zentralverwaltung (20) zu der Verkaufsräumlichkeit (10) bereitstellt.

15. Informationstechnische Schnittstelle nach Anspruch 13 oder 14, **dadurch gekennzeichnet, dass** die Schnittstelle die Daten über aktuelle Lieferungen des Lieferanten (30) zu den Verkaufsräumlichkeiten (10), zu einer getätigten Verkaufshandlung, zu einem zugehörigen Verkaufspreis und zu einem Warenbestand in der Verkaufsräumlichkeit (10) bidirektional bereitgestellt werden.

16. Verfahren nach einem der Ansprüche 1 bis 9, Vorrichtung nach einem der Ansprüche 10 bis 12 oder Schnittstelle nach einem der Ansprüche 13 bis 15, **dadurch gekennzeichnet, dass** wenigstens einer der Lieferanten (30) ein Produzent (31), ein Zwischenhändler oder ein Großhändler ist.
